# EUROPEAN PATENT APPLICATION

(11) **EP 4 219 581 A1**
(43) Date of publication of application: **02.08.2023**
(21) Application number: 23151104.9
(22) Date of filing: 11.01.2023
(51) Int. Cl.: C08G 18/32, C08G 18/64, C08G 18/76, C08L 93/04

(54) **MULTIFUNCTIONAL POLYOL RESINS, CURABLE COMPOSITIONS, AND METHODS THEREOF**

(30) Priority: 28.01.2022 US 202263304276 P
(71) Applicant: Ingevity South Carolina, LLC, North Charleston, SC 29405 (US)
(72) Inventor: YU, Wumin, Mt. Pleasant, 29466 (US); LIU, Yongning, Apex, 27539 (US)
(74) Representative: Forresters IP LLP

(57) **Abstract**

Multifunctional resins suitable for use in coating and adhesive compositions derived from bio-based feedstocks are disclosed. The multifunctional resins are derived from a reaction mixture including (A) a polyol resin, (B) at least one compound having at least one of a dibasic carboxylic acid or derivative thereof, an anhydride, a caprolactone, a C=O source, a polyhydric alcohol, or a combination thereof, and (C) a catalyst.

## Description

### BACKGROUND OF THE INVENTION

Field of the Discovery. The present disclosure relates to multifunctional polyol resins, compositions including multifunctional polyol resins, curable compositions, cured compositions, and methods for preparing multifunctional polyol resins.

Background Information. This disclosure relates to multifunctional polyol resins, and in particular to multifunctional polyol resins derived from rosin acids and fatty acids, as well as compositions, methods of manufacture, and uses thereof.

Multifunctional polyol resins are useful in the manufacture of articles and components for a wide range of applications, such as coatings, adhesives, sealants and elastomers. However, most conventional resins are derived from petroleum sources. With the increasing awareness of future depletion of fossil fuel reserves, as well as the desire to move toward more environmentally friendly and sustainable "green" feedstocks, use of bio-based feedstocks to develop multifunctional polyol resins has attracted increasing attention.

Rosin, a bio-renewable raw material, is commercially available, and can be obtained from pine trees by distillation of oleoresin (gum rosin being the residue of distillation), by extraction of pine stumps (wood rosin) or by fractionation of tall oil (tall oil rosin). Rosin contains a mixture of rosin acids, fatty acids, and other unsaponifiable compounds.

Tall oil, a type of rosin (originating from the Swedish word "tallolja" ("pine oil")) is obtained as a by-product of Kraft pulping in the paper making process. A product of the Kraft process, crude tall oil (CTO), can be further purified by distillation to provide tall oil heads, tall oil fatty acids (TOFA), distilled tall oil (DTO), tall oil rosin (TOR), and tall oil pitch. These products have long been used in traditional fields such as inks, adhesives, oil fields, mining, paper sizing and detergents.

There accordingly remains a need in the art for multifunctional polyol resins derived from bio-based feedstocks that provide the properties desired for coatings, for example, improved hydrolytic stability, heat resistance and UV resistance, good mechanical properties, good adhesion on plastic, aluminum and steel substrates, enhanced chemical resistance, and reduced water uptake with the improvement in hydrophobicity.

### SUMMARY

Presently described are multifunctional polyol resins, curable compositions including multifunctional polyol resins, polyurethane resins and melamine-based resins derived from multifunctional polyol resins, methods of their preparation and uses thereof.

Thus, in an aspect, the disclosure provides a multifunctional polyol resin obtained from a reaction mixture comprising
A) a polyol resin comprising
   i) rosin-based polyol resin derived from
      a glycidyl ester of a rosin acid or a derivative thereof, a glycidyl ester of a fatty acid or a derivative thereof, or a combination thereof; and
      a hydroxyl-functionalized nucleophile comprising water, a hydroxyl-functionalized amine, a hydroxyl-functionalized thiol, a polyhydric alcohol, acrylic acid, methacrylic acid, or a combination thereof, and
      a catalyst; or
   ii) a bio-based polyol resin derived from
      a glycidyl ether component comprising an epoxy resin, a glycidyl ether compound comprising at least two glycidyl ether groups; or a combination thereof, and
      a bio-based component comprising rosin acid or a derivative thereof, a fatty acid or a derivative thereof, or a combination thereof, and
      a catalyst; or
   iii) a combination thereof; and
B) at least one compound comprising at least one of a dibasic carboxylic acid or derivative thereof, an anhydride, a caprolactone, a C=O source, a polyhydric alcohol, or a combination thereof; and
C) a catalyst.

In another aspect, the disclosure provides methods of making multifunctional polyol resins of the present disclosure.

In an additional aspect, the disclosure provides methods of using multifunctional polyol resins of the present disclosure.

In a further aspect, the disclosure provides polyurethane resins or melamine-based resins derived from multifunctional polyol resins of the present disclosure.

The preceding general areas of utility are given by way of example only and are not intended to be limiting on the scope of the present disclosure and appended claims. Additional objects and advantages associated with the compositions, methods, and processes of the present disclosure will be appreciated by one of ordinary skill in the art in light of the instant claims, description, and examples. For example, the various aspects and embodiments of the present disclosure can be utilized in numerous combinations, all of which are expressly contemplated by the present disclosure. These additional advantages objects and embodiments are expressly included within the scope of the present disclosure. The publications and other materials used herein to illuminate the background of the invention, and in particular cases, to provide additional details respecting the practice, are incorporated by reference.

### DETAILED DESCRIPTION

The present disclosure will now be described more fully hereinafter, but not all embodiments of the disclosure are shown. While the disclosure has been described with reference to exemplary embodiments, it will be understood by those skilled in the art that various changes can be made and equivalents can be substituted for elements thereof without departing from the scope of the disclosure. In addition, many modifications can be made to adapt a particular structure or material to the teachings of the disclosure without departing from the essential scope thereof.

Where a range of values is provided, it is understood that each intervening value between the upper and lower limit of that range and any other stated or intervening value in that stated range is encompassed within the invention. The upper and lower limits of these smaller ranges can independently be included in the smaller ranges is also encompassed within the invention, subject to any specifically excluded limit in the stated range. Where the stated range includes one or both of the limits, ranges excluding either both of those included limits are also included in the present disclosure.

The following terms are used to describe the present invention. In instances where a term is not specifically defined herein, that term is given an art-recognized meaning by those of ordinary skill applying that term in context to its use in describing the present invention.

The articles "a" and "an" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of and "consisting essentially of shall be closed or semi-closed transitional phrases, respectively, as set forth in the 10 United States Patent Office Manual of Patent Examining Procedures, Section 2111.03.

As used herein in the specification and in the claims, the phrase "at least one," in reference to a list of one or more elements, should be understood to mean at least one element selected from anyone or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a nonlimiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc. It should also be understood that, unless clearly indicated to the contrary, in any methods claimed herein that include more than one step or act, the order of the steps or acts of the method is not necessarily limited to the order in which the steps or acts of the method are recited.

### Exemplary Aspects and Embodiments

Surprisingly and unexpectedly, the inventors found that the multifunctional resins can be obtained that are suitable for use in coating and adhesive compositions. The multifunctional resins are derived from a reaction mixture comprising (A) a polyol resin, (B) at least one compound comprising at least one of a dibasic carboxylic acid or derivative thereof, an anhydride, a caprolactone, a C=O source, a polyhydric alcohol, or a combination thereof, and (C) a catalyst.

In any aspect or embodiment described herein, the polyol resin (A) includes a (i) a rosin-based polyol resin, (ii) a bio-based polyol resin, or a combination of (i) a rosin-based polyol resin and (ii) a bio-based polyol resin. In any aspect or embodiment described herein, the (i) rosin-based polyol resin is derived from a reaction mixture comprising a glycidyl ester of a rosin acid or a derivative thereof and a glycidyl ester of a fatty acid or a derivative thereof; a hydroxyl-functionalized nucleophile comprising water, a hydroxyl-functionalized amine, a hydroxyl-functionalized thiol, a polyhydric alcohol, acrylic acid, methacrylic acid, or a combination thereof, and a catalyst. In any aspect or embodiment described herein, the (ii) bio-based polyol resin is derived from a reaction mixture comprising a glycidyl ether component comprising an epoxy resin, a glycidyl ether compound comprising at least two glycidyl ether groups; or a combination thereof, and a bio-based component comprising a rosin acid or a derivative thereof, a fatty acid or a derivative thereof, or a combination thereof.

In any aspect or embodiment described herein, the hydroxyl-functionalized nucleophile (B) comprises at least one dibasic carboxylic acid or derivative thereof, an anhydride, a caprolactone, a C(=O) source, a polyhydric alcohol, or a combination thereof.

Curable compositions, such as polyurethane resins and melamine-based resins, can be derived from the multifunctional resins of the present disclosure and an optional auxiliary resin. The cured compositions obtained from the curable compositions can have a balance of properties including improved hydrolytic stability, heat resistance and UV resistance, good mechanical properties, good adhesion on plastic, aluminum and steel substrates, enhanced chemical resistance, and reduced water uptake with the improvement in hydrophobicity. The disclosed compositions and methods relate to multifunctional polyol resins, curable compositions including the multifunctional polyol resins, polyurethane resins derived from the multifunctional polyol resins, melamine-based resins derived from the multifunctional polyol resins, methods for preparing the multifunctional polyol resins, methods for preparing curable compositions including the multifunctional polyol resins; and uses thereof, such as for example, coating compositions.

As described above, conventional multifunctional polyol resins are derived from petroleum sources. It would be an advantage to incorporate bio-based feedstocks, such as bio-based fatty acids and bio-based rosin acids, into multifunctional polyol resins to provide more environmentally-friendly multifunctional polyol resins suitable for use in curable compositions. It would be a further advantage if the thermosets obtained from the curable compositions had properties suitable for use in coatings and adhesives applications.

### Exemplary Polyols

In any of the aspects or embodiments described herein, a multifunctional polyol resin is obtained from a reaction mixture comprising a polyol resins (A). In any aspect or embodiment described herein, the polyol resin (A) can include (i) a rosin-based polyol resin derived from a reaction mixture comprising a glycidyl ester of a rosin acid or a derivative thereof and a glycidyl ester of a fatty acid or a derivative thereof; and water, a hydroxyl-functionalized amine, a hydroxyl-functionalized thiol, a polyhydric alcohol, acrylic acid, methacrylic acid, or a combination thereof; and a catalyst; or (ii) a bio-based polyol resin derived from a reaction mixture comprising a glycidyl ether component comprising an epoxy resin, a glycidyl ether compound comprising at least two glycidyl ether groups; or a combination thereof; and a bio-based component comprising a rosin acid or a derivative thereof, a fatty acid or a derivative thereof, or a combination thereof, and a catalyst; or (iii) a combination thereof.

In any aspect or embodiment described herein, (i) the rosin-based polyol resins and the (ii) bio-based polyol resins are derived from rosin acids, fatty acids, or derivatives thereof. In any aspect or embodiment described herein, the fatty acid is derived from at least one of a plant oil, crude tall oil, tall oil fatty acid, distilled tall oil, coconut oil, palm oil, rosin, tall oil rosin, gum tree rosin, wood rosin, softwood rosin, hardwood rosin, derivatives thereof, or a combination thereof. In any aspect or embodiment described herein, the rosin acid is derived from crude tall oil, rosin, tall oil rosin, gum tree rosin, wood rosin, softwood rosin, hardwood rosin, distilled tall oil, derivatives thereof, or a combination thereof.

In any aspect or embodiment described herein, (i) the rosin-based polyol resin can include a combination of rosin acids or derivatives thereof and fatty acids or derivatives thereof. In any aspect or embodiment described herein, (ii) the bio-based polyol resin can include a combination of rosin acids or derivatives thereof and fatty acids or derivatives thereof. For example, one skilled in the art appreciates that commercial TOFA contains some TOR, and commercial TOR also contains various levels of TOFA. In any aspect or embodiment described herein, rosin acids and/or fatty acids are derived from crude tall oil, tall oil fatty acid, distilled tall oil, tall oil rosin, gum tree rosin, wood rosin, softwood rosin, hardwood rosin, a natural oil, or a combination thereof. In any aspect or embodiment described herein, the natural oils can include vegetable oil, safflower oil, sesame oil, canola oil, olive oil, oil, coconut oil, or a combination thereof.

In any aspect or embodiment described herein, (i) the rosin-based polyol resin can be derived from distilled tall oil (DTO). In any aspect or embodiment described herein, (ii) the bio-based polyol resin can be derived from distilled tall oil (DTO). DTO is a mixture of rosin acids and tall oil fatty acids (TOFA). DTO rosin acids include C₂₀ mono-carboxylic acids with a core having a fused carbocyclic ring system comprising double bonds that vary in number and location. In any aspect or embodiment described herein, examples of rosin acids include abietic acid, neoabietic acid, pimaric acid, levopimaric acid, sandaracopimaric acid, isopimaric acid, and palustric acid. TOFAs can have a range of chain lengths. In any aspect or embodiment described herein, the TOFAs range from C-16 to C-29. DTO can further contain dimerized rosin acids and dehydroabietic acids formed during the Kraft process and distillation of crude tall oil (CTO). In any aspect or embodiment described herein, DTO includes fatty acid derivatives and/or rosin acid derivatives. In any aspect or embodiment described herein, rosin acid derivatives can include hydrogenated rosins, disproportionated rosins, maleic anhydride modified rosins, fumaric acid modified rosins, and the like. In any aspect or embodiment described herein, fatty acid derivatives can include dimer fatty acids (e.g., DTC-1500 from INGEVITY) and/or acid-modified fatty acids, such as acrylic acid modified fatty acids (e.g., DIACID 1550 from INGEVITY) and maleic anhydride modified fatty acids (e.g., TENAX 2010 from INGEVITY).

In any aspect or embodiment described herein, (i) the rosin-based polyol resin can include mixtures of rosin acids and fatty acids having a variable rosin acid content. In any aspect or embodiment described herein, (ii) the bio-based polyol resin can include mixtures of rosin acids and fatty acids having a variable rosin acid content. In any aspect or embodiment described herein, the mixtures include about 1 to about 99 wt%, or about 30 to about 80 wt% fatty acids and about 1 to about 99 wt%, or about 20 to about 70 wt% rosin acids. In any aspect or embodiment described herein, the mixtures of rosin acids and fatty acids are present in the reaction mixture to obtain multifunctional polyol resin can have from about 1 wt% to about 99 wt%, about 5 wt% to about 95 wt%, about 10 wt% to about 90 wt%, about 15 wt% to about 80 wt%, about 20 wt% to about 70 wt%, about 20 wt% to about 50 wt%, about 20 wt% to about 30 wt%, about 20 wt% to about 28 wt%, 28 wt% to about 70 wt%, or about 28 wt% to about 50 wt%, each based on the total weight of the mixture. In any aspect or embodiment described herein, the mixture of rosin acids and fatty acids can be a distilled tall oil. Commercially available DTOs with variable rosin acid content include ALTAPYNE 226 (20 wt% rosin acid), ALTAPYNE 28B (28 wt% rosin acid), ALTAPYNE M50 (50 wt% rosin acid), and/or ALTAPYNE M70 (70 wt% rosin acid), all from INGEVITY.

In any aspect or embodiment described herein, rosin acid derivatives and/or fatty acid derivatives can include Diels-Alder adducts. Diels-Alder cycloaddition can be used to form what are commonly called "rosin adducts" from rosin acids and/or "fatty acid adducts" from fatty acids. Diels-Alder adduction occurs with s-cis conjugated double bonds, or double bonds capable achieving a conjugated s-cis configuration. For example, abietic-type rosin acids undergo Diels-Alder adduction. Among the fatty acids present in tall oil products, oleic acid, linoleic acid, linolenic acid each have double bonds capable of undergoing an ene reaction (as is the case for oleic acid because it has a single double bond) or Diels-Alder cycloaddition (for linoleic acid and linolenic acid).

In any aspect or embodiment described herein, non-limiting exemplary dienophiles that can be used to react with conjugated dienes include maleic anhydride, fumaric acid, acrylonitrile, itaconic anhydride, and acrylic acid. Diels-Alder products obtained from the reaction of maleic anhydride with a rosin acid or a fatty acid have three carboxylic acid groups and are referred to as "maleated rosin" and "maleated fatty acid," respectively. Similarly, Diels-Alder products obtained from the reaction of fumaric acid with a rosin acid or a fatty acid have three carboxylic acid groups and are referred to as "fumarated rosin" and "fumarated fatty acid," respectively. In any aspect or embodiment described herein, the molar amount of dienophile (e.g., fumaric acid) used in the Diels Alder reaction can range from about 1 to about 40 mol%, 1 to about 30 mol%, about 5 to about 25 mol%, or about 10 to about 25 mol%, each based on the total moles of acid in the diene (e.g., rosin acids + fatty acids in DTO).

In any aspect or embodiment described herein, rosin acid derivatives and/or fatty acid derivatives include dimers. The double bonds of rosin acids can react with each other to form rosin dimers. Similarly, the double bonds of fatty acids can react with each other to form fatty acid dimers. In any aspect or embodiment described herein, rosin dimer molecule is a C₄₀-terpene typically having two double bonds and two carboxylic acid groups. Rosin dimerization can be controlled to obtain appropriate levels of dimerization; hence the dimer rosin product may be a mixture of rosin and dimerized-rosin molecules.

In any aspect or embodiment described herein, rosin acid derivatives include hydrogenation products. Because the unsaturated double bonds of rosin acids are prone to oxidation and cause discoloration of a product, it may be desirable to reduce the probability of oxidation by reducing the number of double bonds in a rosin acid. Rosin acids can be partially hydrogenated to saturate one of the double bonds of the rosin acid or fully hydrogenated to saturate both double bonds.

In any aspect or embodiment described herein, rosin acid derivatives and/or fatty acid derivatives include dehydrogenation products, also referred to as disproportionation products. For example, this process can be used to reduce the conjugated double bonds in some rosin acids, making the resulting disproportionated rosin less susceptible to oxidation. The reaction takes place between the dienes of two identical rosin acids, where one is hydrogenated and the other is dehydrogenated, thus altering the ratios of the rosin acids from the untreated rosin. Similarly, in any aspect or embodiment described herein, fatty acid derivatives can include disproportionation products (e.g., oleic acid).

In any aspect or embodiment described herein, derivatives of rosin acids and/or fatty acids include carboxylic acid salts. In any aspect or embodiment described herein, salts include salts of rosin acids or fatty acids having monovalent cations ("soaps") and salts of rosin acids having divalent cations ("rosinates").

In any aspect or embodiment described herein, derivatives of rosin acids and/or fatty acids include oxidized rosin acids and oxidized fatty acids. The double bonds of rosin acids and fatty acids are prone to isomerization and oxidation when exposed to heat, air, light, and mineral acids, thus providing a mixture oxidation products.

In any aspect or embodiment described herein, the rosin acid derivatives include a disproportionated rosin, a maleated rosin, a fumarated rosin, an acrylonitrile adduct, itaconic acid adduct, an acrylic acid adduct, a dimer acid, an oxidized rosin, a hydrogenated rosin, or a combination thereof.

In any aspect or embodiment described herein, the fatty acid derivatives include a maleated fatty acid, an acrylonitrile fatty acid adduct, a fumarated fatty acid adduct, acrylic-acid fatty acid adduct, an itaconic acid fatty acid adduct, a dimer fatty acid, an oxidized fatty acid, a hydrogenated rosin acid, or a combination thereof.

In any aspect or embodiment described herein, the multifunctional polyol resins are derived from rosin-based polyol resins. In any aspect or embodiment described herein, the rosin-based polyol resin can be derived from a glycidyl ester of a rosin acid or derivative thereof, a glycidyl ester of fatty acid or derivative thereof, or a combination thereof.

Unmodified rosin acids and fatty acids each have a single carboxylic acid available for introducing a single glycidyl ester group. In any aspect or embodiment described herein, in order to provide a multifunctional polyol resin, the single glycidyl ester group is reacted with water (OH), a hydroxyl functionalized amine or thiol, a polyhydric alcohol, acrylic acid, or methacrylic acid in the presence of a catalyst. In any aspect or embodiment described herein, a glycidyl ester of an unmodified rosin acid and/or fatty acid can be converted to a diol by reaction with water in the presence of acid catalyst. In any aspect or embodiment described herein, a glycidyl ester can be converted to a triol by reaction with diethanolamine in the presence of a triphenylphosphine catalyst.

In any aspect or embodiment described herein, (i) the rosin-based polyol resin is derived from the reaction of a combination of a glycidyl ester of a rosin acid and a glycidyl ester of a fatty acid, such as for example, DTO, with a hydroxyl-functionalized nucleophile such as water and the reaction is shown below for illustrative purposes.

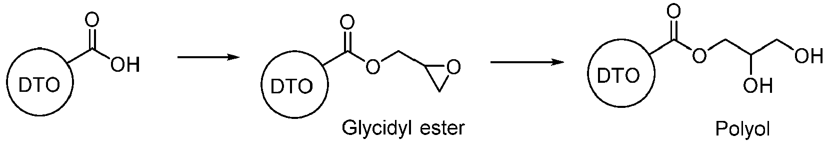

In any aspect or embodiment described herein, the rosin-based polyol resins can also be derived from the reaction of a derivative of a rosin acid and a derivative of a fatty acid with a hydroxyl-functionalized nuceophile. In any aspect or embodiment described herein, in which the multifunctional polyol resin is derived from a combination of a glycidyl ester of a rosin acid derivative and a glycidyl ester of a fatty acid derivative, such as for example, fumarate-modified DTO, that is then reacted with water is shown below for illustrative purposes.

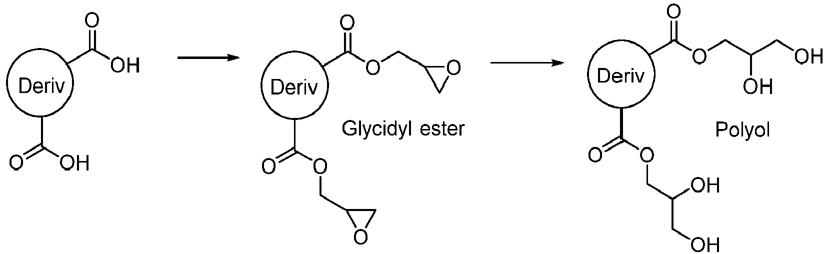

In any aspect or embodiment described herein, the rosin-based polyol resins can be prepared by converting rosin acids and/or fatty acids to glycidyl esters. The glycidyl esters can be prepared by reacting the mixture of rosin acids and/or fatty acids with epihalogenhydrin in the presence of heat (e.g., about 60 to about 125 °C), followed by a ring-closing reaction in the presence of catalyst (e.g., base). In particularly preferred methods that minimize side-product formation, a small excess of epihalogenhydrin is used optionally, in the presence of an organic solvent, to form the halohydrin intermediate, followed by a ring-closing reaction at a temperature of up to about 30 °C to provide the glycidyl ester in good purity.

In any aspect or embodiment described herein, the preferred methods utilize a molar excess of less than about 3 equivalents (eq.), less than about 2.5 eq., less than about 2.0 eq., from greater than about 1 to about 1.5 eq., from greater than about 1 to about 1.4 eq., from greater than about 1 to about 1.3 eq., from greater than about 1 to about 1.25 eq., or from greater than about 1 to about 1.2 eq., each based on the equivalents of carboxylic acid groups in the rosin acids and/or fatty acids. Advantageously, removal/recovery of unreacted epihalogenhydrin from the reaction mixture is not required using the preferred methods because a small excess is sufficient to provide complete conversion of the carboxylic acid substrate to the halohydrin intermediate. This improvement makes the methods amenable to scale-up, as the small excess of epihalogenhydrin can be hydrolyzed to glycerol, removed during the work-up, and does not cause phase-separation difficulties. There is no need to implement an epihalogenhydrin recovering step, which is costly and creates environmental concerns.

In any aspect or embodiment described herein, a catalyst is present during the formation of the halohydrin intermediate of the first step of the methods. In any aspect or embodiment described herein, the catalyst can include onium salts with various alkyl chains. In any aspect or embodiment described herein, non-limiting exemplary catalysts include quaternary ammonium salts, phosphines, or phosphonium salts. In any aspect or embodiment described herein, the catalyst can include tetrabutyl ammonium halides, such as tetrabutyl ammonium bromide, triphenylphosphine, trialkylphosphines, or triarylphosphines.

In any aspect or embodiment described herein, the ring-opening reaction to form the halohydrin intermediate can be performed at a temperature from about 60 to about 125 °C. In any aspect or embodiment described herein, the reaction can be considered complete when the acid number is less than about 10 mg KOH/g (preferably less than about 5 mg KOH/g). In any aspect or embodiment described herein, the reaction mixture is then cooled to around ambient temperature. It is an advantage of the disclosed methods that isolation of the halohydrin intermediate is not necessary prior to the ring-closing reaction.

In any aspect or embodiment described herein, the disclosed methods include a ring-closing reaction to convert the halohydrin intermediate to the glycidyl ester. In any aspect or embodiment described herein, ring-closure can be accomplished by combining the reaction mixture including the halohydrin intermediate with a basic solution comprising an alkaline base, water, optionally a water-soluble organic solvent, and optionally an organic solvent, to form a reaction mixture, and allowing the reaction to proceed at a temperature of up to about 30 °C to provide the glycidyl ester. In any aspect or embodiment described herein, the temperature of the ring-closing step is maintained up to about 25 °C, or up to about 20 °C, or up to about 15 °C, or up to about 10 °C.

In any aspect or embodiment described herein, the ring-closing reaction can be performed at around ambient temperature to form the glycidyl ester. In any aspect or embodiment described herein, conventional methods can require elevated temperatures (e.g., 60-80 °C), leading to side-product formation. In any aspect or embodiment described herein, a basic solution of an alkaline base, water, optionally a water-soluble organic solvent, and optionally an organic solvent is added at a rate such that the temperature is up to about 30 °C. In any aspect or embodiment described here, the inorganic base can include an alkaline base, an alkaline earth base, or a combination thereof. The inorganic base acts to neutralize the acid as it is generated in the reaction. Specifically, when the hydroxyl of the halohydrin intermediate attacks the adjacent halogenated carbon, hydrogen halogen (e.g., hydrogen chloride) is generated, which can be neutralized with the inorganic base. In any aspect or embodiment described herein, the amount of inorganic base added to the ring-closing reaction can be up to about 1.5 eq., or up to about 1.2 eq., based on the molar amount of epihalogenhydrin added to the reaction in step (i). In any aspect or embodiment described herein, preferably the inorganic base is added in a stoichiometric amount (i.e., about 1 eq.), based on the molar amount of epihalogenhydrin added to the reaction in step (i). In any aspect or embodiment described herein, when present, water-soluble solvents include alcohol solvents, such as methanol, ethanol, and isopropanol, ether solvents, such as tetrahydrofuran, 1, 2-dimethoxy-ethane; acetonitrile; acetone; N,N-dimethylformamide; dimethyl sulfoxide; or any combination thereof. In any aspect or embodiment described here, the amount of the water-soluble solvent added should be an amount from 0.5 to 5 times by weight of the halohydrin intermediate. In any aspect or embodiment described herein, the first step is performed neat (i.e., in the absence of solvent). In any aspect or embodiment described herein, the organic solvent is added to the halohydrin intermediate prior to the addition of the basic solution. In any aspect or embodiment described here, the water-soluble solvent can be present from about 10 to about 50 wt%, from about 10 to about 40 wt%, from about 10 to about 30 wt%, or from 10 to about 25 wt%, each based on the sum of total weight of the halohydrin intermediate.

Commercially available examples of rosin-based polyols include AltaMer RDA and AltaMer RTA, each available from INGEVITY.

In any aspect or embodiment described here, the multifunctional polyol resins can also be derived from (ii) bio-based polyol resins. In any aspect or embodiment described here, the bio-based polyol resins are derived from a glycidyl ether component including an epoxy resin, a glycidyl ether compound having two or more glycidyl ether functional groups, or a combination thereof; and a bio-based component comprising a rosin acid or derivative thereof, a fatty acid or derivative thereof, or a combination thereof.

As shown below, in any aspect or embodiment described herein, the glycidyl ether component that includes an epoxy resin as the glycidyl ether component, less than all of the glycidyl ether groups can undergo a ring-opening reaction with the rosin acid or derivative thereof, the fatty acid or derivative thereof, or combination thereof (e.g., DTO as shown below) and the remaining glycidyl ether groups can undergo a ring-opening reaction to provide a terminal functional group (e.g., methacrylate).

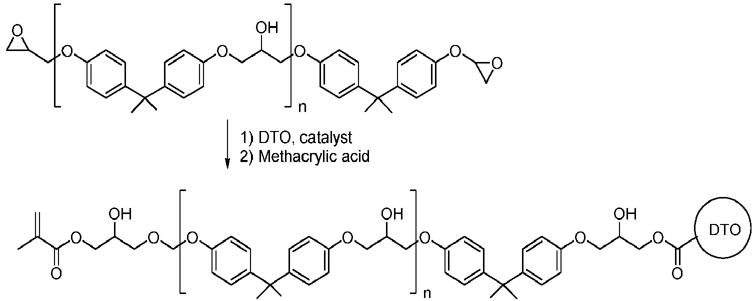

In any aspect or embodiment described herein, both of the glycidyl ether groups of the epoxy resin can undergo a ring-opening reaction with the carboxylic acids of the rosin acids or derivatives thereof, fatty acids or derivatives, or a mixture thereof. An exemplary embodiment is shown below for illustrative purposes, wherein both glycidyl ether groups undergo a ring-opening reaction with the carboxylic acid of DTO.

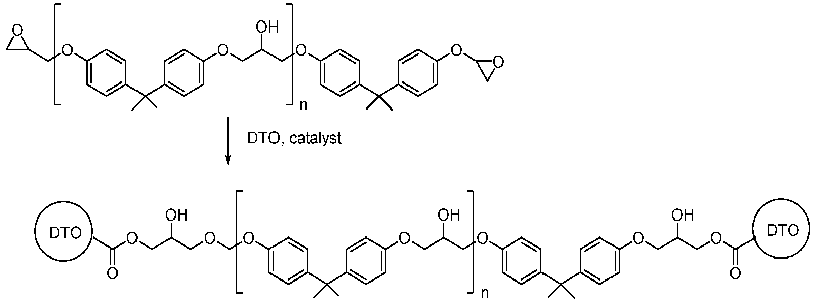

In any aspect or embodiment described here, the epoxy resins can include a bisphenol epoxy resins, a novolac epoxy resins, or a combination thereof. Bisphenol epoxy resins can be obtained from the reaction of a bisphenol with epichlorohydrin. In any aspect or embodiment described here, the bisphenol epoxy resins can include bisphenol A epoxy resin, bisphenol F epoxy resin, or a combination thereof. In any aspect or embodiment described herein, the bisphenol epoxy resins can be liquid epoxy resins and have an epoxide equivalent weight of about 150 to about 200, or about 160 to about 200, or about 170 to about 200, or about 180 to about 200 grams per equivalent as determined according to ASTM D1652. A preferred bisphenol epoxy resin is bisphenol A epoxy resin, commercially available as EPON 828; from Hexion, having an epoxide equivalent weight of about 185 to about 192 grams per equivalent. An exemplary embodiment is shown below for illustrative purposes, wherein the glycidyl ether component is a BPA epoxy resin that is reacted with a mixture of rosin acids and fatty acids, such as, for example, DTO.

Novolac epoxy resins are the reaction products of a phenolic compound, such as phenol, o- cresol, m- cresol, or p-cresol, or a combination of these, with an aldehyde, such as formaldehyde, benzaldehyde, acetaldehyde, and the like. For example, in any aspect or embodiment described herein, the novolac epoxy resin can be a phenol-formaldehyde copolymer, wherein the phenolic ring is substituted with a glycidyl ether group. The novolac epoxy can have an average epoxy functionality of from about 2 to about 6, from about 3 to about 6, from about 3 to about 5, or from about 3 to about 4. In any aspect or embodiment described herein, the novolac epoxy resins have an epoxide equivalent weight as measured by ASTM D 1652 of about 150 to about 200, or about 160 to about 190, or about 170 to about 190, or about 170 to about 185 grams per equivalent. In any aspect or embodiment described herein, a preferred novolac epoxy resin is D.E.N. 438, from Olin, having an epoxide equivalent weight of about 176 to about 181 grams per equivalent.

In any aspect or embodiment described here, the optional bio-based polyol resin can be derived from a glycidyl ether compound. As used herein, "glycidyl ether compound" is a monomer and does not include oligomeric or polymeric compounds. In any aspect or embodiment described here, the glycidyl ether compound has at least two glycidyl ether groups, e.g., a diglycidyl ether, triglycidyl ether, tetraglycidyl ether, or a combination thereof. In any aspect or embodiment described herein, non-limiting examples of the diglycidyl ethers include a diglycidyl ether of neopentyl glycol, a diglycidyl ether of 1,4-butanediol, and a diglycidyl ether of resorcinol. In any aspect or embodiment described here, the triglycidyl ether can include trimethylolpropane triglycidyl ether and the tetraglycidyl ether can include pentaerythritol tetraglycidyl ether. An exemplary embodiment of bio-based polyol resin derived from diglycidyl ether of resorcinol and DTO is shown below for illustrative purposes. As shown below, in any aspect or embodiment described herein, with regards to the glycidyl ether component, less than all of the glycidyl ether groups can undergo a ring-opening reaction with DTO and the remaining glycidyl ether groups can undergo a ring-opening reaction with a nucleophile to provide a terminal functional group (e.g., methacrylate).

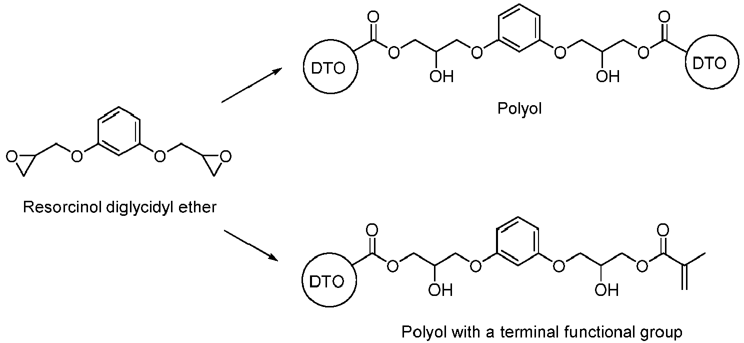

In any aspect or embodiment described herein, the multifunctional polyol resin is derived from distilled tall oil. In any aspect or embodiment described herein, distilled tall oil can comprise up to about 50 wt%, from about 20 wt% to about 50 wt%, about 20 wt% to about 30 wt%, about 20 wt% to about 28 wt%, or about 28 wt% to about 50 wt% rosin acids, each based on the total weight of the distilled tall oil.

In any aspect or embodiment described herein, (ii) the bio-based resins can be prepared by admixing a glycidyl ether component and a bio-based component to form a reaction mixture; heating the reaction mixture; adding a catalyst to the reaction mixture; and allowing the reaction to proceed until the reaction mixture has an acid number of less than or equal to about 5 mg KOH/g (preferably about 1 mg KOH/g) according to ASTM D664. The reaction temperature can range from about 80 to about 160 °C, or about 100 to about 150 °C (preferably from about 125 to about 145 °C). Commercially available examples of bio-based polyols include AltaMer GA-500 and AltaMer GA-550, each from INGEVITY.

In any aspect or embodiment described herein, (ii) the bio-based resin includes bisphenol A epoxy resin as the glycidyl ether component, and the bio-based component is a distilled tall oil comprising up to about 50 wt%, from about 20 wt% to about 50 wt%, about 20 wt% to about 30 wt%, about 20 wt% to about 28 wt%, or about 28 wt% to about 50 wt% rosin acids, based on the total weight of the bio-based component.

In any aspect or embodiment described herein, (ii) the bio-based resin includes a mixture of bisphenol A epoxy resin and a novolac epoxy resin as the glycidyl ether component, and the distilled tall oil comprises up to about 50 wt%, about 20 wt% to about 50 wt%, about 20 wt% to about 30 wt%, about 20 wt% to about 28 wt%, or about 28 wt% to about 50 wt% rosin acids, based on the total weight of the distilled tall oil.

In any aspect or embodiment described herein, (ii) the bio-based resin includes a mixture of triglycidyl ether and novolac epoxy resin as the glycidyl ether component, and the distilled tall oil comprises up to about 50 wt%, about 20 wt% to about 50 wt%, about 20 wt% to about 30 wt%, about 20 wt% to about 28 wt%, or about 28 wt% to about 50 wt% rosin acids, based on the total weight of the distilled tall oil.

In any aspect or embodiment described herein, (ii) the bio-based resin includes glycidyl ether component is trimethylolpropane triglycidyl ether, and the bio-based component is a distilled tall oil comprising about 50 wt% to about 70 wt% rosin acids, based on the total weight of the distilled tall oil.

### Multifunctional Polyol Resins

The polyol resin (e.g., (i) rosin-based polyols, (ii) the bio-based polyols, or (iii) a combination thereof) is further functionalized by reaction with at least one compound (B) to provide the multifunctional polyol resins. In any aspect or embodiment described herein, the multifunctional polyol resins include polyester polyols, polyether polyols, polycarbonate polyols, and polycaprolactone polyols.

In any aspect or embodiment described herein, the (i) rosin-based polyols, the (ii) the bio-based polyols, or (iii) a combination of (i) and (ii), the polyester polyols are derived from at least one of a dibasic carboxylic acid or derivative thereof, an anhydride, or a combination thereof, and optionally, reaction of the carboxylic acid and/or ester of the resulting intermediate with a polyhydric alcohol. In an embodiment, the dibasic carboxylic, anhydride, and derivatives thereof are functionalized with hydroxyl groups and are reacted with the polyol(s). In any aspect or embodiment described herein, the dibasic carboxylic, anhydride, and derivatives thereof are reacted with the polyol(s) to provide a reactive intermediate that can undergo further reaction with a polyhydric alcohol, which is discussed further below.

In any aspect or embodiment described herein, the dibasic carboxylic acid, derivatives thereof and anhydrides that are used for a general polyester polyol synthesis can be used here without any limitation and include single compounds or mixtures of compounds. In any aspect or embodiment described herein, examples of dibasic acids include adipic acid, fumaric acid, succinic acid, isophthalic acid, terephthalic acid, maleic acid, glutaric acid, diglycolic acid, itaconic acid, suberic acid, dodecanedioic acid, folic acid, azelaic acid, glutaconic acid, glutamic acid, aspartic acid, sebacic acid, pamoic acid, tartaric acid, tartronic acid, acetylenedicarboxylic acid, malonic acid, dodecylsuccinic acid, fatty diacid, fatty acid dimer, naphthalenedicarboxylic acid, cyclohexane dicarboxylic acid, and the like. In any aspect or embodiment described herein, examples anhydrides include succinic anhydride, malic anhydride, dodecylsuccinic anhydride, phthalic anhydride, and the like. In any aspect or embodiment described herein, examples of dibasic acid diesters include adipic acid dimethyl ester, dimethyl terephthalate, dimethyl hexadecanedioate, dimethyl cyclohexane dicarboxylate, and the like. In addition to dibasic acid diesters, in any aspect or embodiment described herein, derivatives of dibasic carboxylic acids include activated esters generated in situ during the activation of the carboxylic acid(s) of the polyol(s) (i.e., (i), (ii), or (iii) a combination of (i) and (ii)).

In any aspect or embodiment described herein, after the reaction (i.e., polycondensation) of the polyol(s) (i.e., (i), (ii), or (iii) a combination of (i) and (ii)) with dibasic carboxylic acid, a derivative thereof, and/or anhydride to form a reactive intermediate, the second carboxylic acid or derivative thereof of the intermediate can undergo reaction with a polyhydric alcohol to provide the polyester polyol. For example, in any aspect or embodiment described herein, when a polyol undergoes reaction with an anhydride an intermediate is formed having a terminal carboxylic acid group. The terminal carboxylic acid group is available for reaction with a polyhydric alcohol to form the multifunctional polyol resin that is a polyester polyol. In any aspect or embodiment described herein, polyhydric alcohols used for a general polyester synthesis can be used here without any limitation. In any aspect or embodiment described herein, examples of polyhydric alcohols include diols, such as for example, alkylene glycols like ethylene glycol, 1,2-propylene glycol, 1,3-propane diol, butylene glycol, pentylene glycol, 3-methyl-1,5-pentanediol, 1,6-hexane diol, 2-ethyl-2-hexyl-1,3-propanediol, 1,7-heptane-diol, 1,8-octanediol , 1,9-nonanediol. 1,10-decanediol, 1,4-cyclohexane diol, diols derived from caprolactone, diols derived from lactide, and the like.

In any aspect or embodiment described herein, the polyester polyols can be prepared by polycondensation. In any aspect or embodiment described herein, suitable polycondensation catalysts for the polyester polyol synthesis include titanium compounds, tin compounds, magnesium compounds, magnesium compounds, aluminum compounds, zinc compounds. In any aspect or embodiment described herein, examples of polycondensation catalysts include tetrabutyl titanate, tetraisopropyl titanate, tetra-2-ethylhexyl titanate, titaniumacetylacetonate tetraalkyl titanates, dibutyltin oxide, dibutyltin dilaurate, butyltin oxide hydroxide, aluminum alkox ides, alkyl zinc, dialkyl zinc, zinc oxide, zinc acetate, titanium isopropoxide, magnesium carbonate, magnesium oxide, or mixtures thereof. In any aspect or embodiment described herein, the amount of catalyst is about 0.01 mole percent to about 2 mole percent based on the amount of dibasic acid, derivative thereof, or anhydride. In any aspect or embodiment described herein, the reaction temperature for the polyester polyol synthesis is about 140 to about 280 °C, or about 180 to about 240 °C. In any aspect or embodiment described herein, an inert gas (such as argon or nitrogen) can be purged into the reactor during the reaction to reduce the color of the final product. In any aspect or embodiment described herein, a solvent that can form an azeotrope with water or small molecule diols can be used to help remove the reaction by-product like water. An example of this kind of solvent is xylene. In any aspect or embodiment described herein, the reaction by-product can be distilled of at a reduced pressure.

In any aspect or embodiment described herein, the average molecular weight of the polyester polyol is not particularly limited but is preferably about 500 to about 5000 (e.g., about 1000 to about 3000).

In any aspect or embodiment described herein, the multifunctional polyol resins can include polycaprolactone polyols. In any aspect or embodiment described herein, the polycaprolactone polyols are derived from the ring-opening polymerization caprolactones (e.g., ε-caprolactone) with (i) a rosin-based polyol, (ii) a bio-based polyol, or (iii) a combination of (i) and (ii). As used herein, the term "caprolactone" is intended to encompass unsubstituted caprolactone and substituted caprolactone. The term "ε-caprolactone" is intended to encompass unsubstituted ε-caprolactone and substituted ε-caprolactone. Unsubstituted ε-caprolactone is particularly preferred.

In any aspect or embodiment described herein, suitable catalysts for ring-opening polymerization of ε-caprolactone include zinc lactate, zinc oxide, zinc powder, diethyl zinc, tin lactate, tin oxide, tin dioxide, stannous oxide, stannous lactate, stannous octoate, stannous chloride, tin powder, propanoic acid or tetrabutyl titanate, or mixtures thereof. In any aspect or embodiment described herein, the amount of catalyst is about 0.001% to about 3%, or about 0.05 to about 1%, based on the total amount of caprolactone and initiator.

In any aspect or embodiment described herein, the multifunctional polyol resins can include polyether polyols. In any aspect or embodiment described herein, polyether polyols can be prepared by ring-opening polymerization of cyclic ethers (such as ethylene oxide, propylene oxide and tetrahydrofuran) using the rosin and DTO derived polyols as the starter. In any aspect or embodiment described herein, catalysts suitable for the ring-opening polymerization of cyclic ethers include acid catalysts, basic catalysts, and coordination catalysts. In any aspect or embodiment described herein, examples of these catalysts include potassium hydroxide, boron trifluoride diethyl etherate, fluoroboric acid, tris(perfluorophenyl)borane, tris(pentafluorophenyl)alane, tris(2,4,6-trifluorophenyl)borane, and the like.

In any aspect or embodiment described herein, polyether polyols can also be prepared by self-condensation of (i) a rosin-based polyol, (ii) a bio-based polyol, or (iii) a combination of (i) and (ii) with polyhydric alcohols. In any aspect or embodiment described herein, examples of suitable polyhydric alcohols include alkylene glycols, such as ethylene glycol, 1,2-propylene glycol, 1,3-propane diol, butylene glycol, pentylene glycol, 3-methyl-1,5-pentanediol, 1,6-hexane diol, 2-ethyl-2-hexyl-1,3-propanediol, 1,7-heptane-diol, 1,8-octanediol, 1,9-nonanediol, 1,10-decanediol, or 1,4-cyclohexane diol, diols derived from caprolactone, diols derived from lactide, and the like). In any aspect or embodiment described herein, suitable catalysts for the self-condensation reaction include sulfuric acid, naphthalene-1,5-disulfonic acid, butanesulfonic acid, perfluorobutanesulfonic acid, benzene- and toluenesulfonic acid, benzene- and naphthalene disulfonic acids, acidic ion exchangers containing sulfonic acid groups and acidic aluminas, and the like. In any aspect or embodiment described herein, the amount of catalyst is about 0.1 to about 2%.

In any aspect or embodiment described herein, the multifunctional polyol resins can include polycarbonate polyols, which can be prepared by reaction of (i) a rosin-based polyol, (ii) a bio-based polyol, or (iii) a combination of (i) and (ii) with a carbonyl (C=O) source. In any aspect or embodiment described herein, the (C=O) source includes any reagent that can provide a carbonyl group and has two leaving groups (for example, oxalyl chloride). However, it may be desirable to use a more environmentally-friendly carbonyl source. For example, in any aspect or embodiment described herein, the polycarbonate polyols can be prepared by transesterification of dimethyl carbonate (DMC) with (i) a rosin-based polyol, (ii) a bio-based polyol, or (iii) a combination of (i) and (ii). In the transesterification, DMC and the (i) a rosin-based polyol, (ii) a bio-based polyol, or (iii) a combination of (i) and (ii) are first reacted under normal pressure. Next, an azeotrope of methanol and DMC is removed by distillation. Then, the chain length of the polycarbonate polyols is increased through elimination of the DMC by facilitating a reaction between the two-methyl carbonate chain-ends. In any aspect or embodiment described herein, catalysts that are suitable for the transesterification reaction include homogeneous catalysts (such as, sodium acetyl acetone, alkali metal salts, metal acetates and NaH), and heterogeneous catalysts (such as, metal oxide catalysts, alkali-metal and/or alkaline-earth-metal catalysts), and supported catalysts.

### Polyurethane Resins and Melamine-based Resins

The multifunctional polyols can be used in curable compositions, such as polyurethane resins and melamine-based resins. Cured samples of the polyurethane and melamine compositions can have improved hydrolytic stability, heat resistance and UV resistance, good mechanical properties, enhanced chemical resistance and reduced water uptake.

The polyurethane resins of the present disclosure are derived from the reaction of multifunctional polyol resin(s) of the present disclosure and an optional auxiliary polyol resin with isocyanate(s). In any aspect or embodiment described herein, the isocyanates can be monomeric, oligomeric, or polymeric. In any aspect or embodiment described herein, exemplary isocyanates include 2,2'-, 2,4'- and 4,4'-diphenylmethane diisocyanate (MDI); 3,3'-dimethyl-4,4'-biphenylene diisocyanate (TODI); a toluene diisocyanate (TDI); a polymeric MDI; a modified liquid 4,4'-diphenylmethane diisocyanate; hexamethylene-diisocyanate (HDI); 4,4'dicyclohexylmethane diisocyanate (H₁₂ MDI); isophorone diisocyanate (IPDI); para-phenylene diisocyanate (PPDI); meta-phenylene diisocyanate (MPDI); tetramethylene diisocyanate; dodecane diisocyanate; octamethylene diisocyanate; decamethylene diisocyanate; cyclobutane-1,3-diisocyanate; 1,2-, 1,3- and 1,4-cyclohexane diisocyanate; 2,4- and 2,6-methylcyclohexane diisocyanate; 4,4'- and 2,4'-dicyclohexyldiisocyanate; 1,3,5-cyclohexane triisocyanate; a isocyanate-methylcyclohexane isocyanate; a isocyanatoethylcyclohexane isocyanate; a bis(isocyanatomethyl)-cyclohexane diisocyanate; 4,4'- and 2,4'-bis(isocyanatomethyl) dicyclohexane; isophorone diisocyanate; 2,4- and 2,6-hexahydrotoluenediisocyanate; 1,2-, 1,3- and 1,4-phenylene diisocyanate; triphenyl methane-4,4',4"-triisocyanate; naphthylene-1,5-diisocyanate; 2,4'-, 4,4'- and 2,2-biphenyl diisocyanate; a polyphenyl polymethylene polyisocyanate (PMDI); meta-tetramethylxylene diisocyanate (m-TMXDI); para-tetramethylxylene diisocyanate (p-TMXDI); or a mixture thereof.

Any suitable urethane catalyst may be used for the preparation of the polyurethane resins, including tertiary amine compounds, amines with isocyanate reactive groups, and organometallic compounds. In any aspect or embodiment described herein, exemplary tertiary amine catalysts include triethylenediamine, N-methylmorpholine, N, N-dimethylcyclohexylamine, pentamethyldiethylenetriamine, tetramethylethylenediamine, bis (dimethylaminoethyl) ether, 1-methyl-4-dimethylaminoethyl-piperazine, 3-methoxy-N-dimethylpropylamine, N-ethylmorpholine; dimethylethanolamine, N-cocomorpholine, N, N-dimethyl-N', N'-dimethyl isopropylpropylenediamine, N, N-diethyl-3-diethyl amino-propylamine, and dimethylbenzylamine. In any aspect or embodiment described herein, exemplary organometallic catalysts include organobismuth, organo mercury, organolead, organoferric, organo zinc, organo zirconium, organo titanium, and organotin catalysts, with organotin catalysts being preferred among these. In any aspect or embodiment described herein, suitable tin catalysts include stannous chloride, tin salts of carboxylic acids such as dibutyltin dilaurate, and stannous octoate, as well as other organometallic compounds. In any aspect or embodiment described herein, a catalyst for the trimerization of polyisocyanates, resulting in a polyisocyanurate, such as an alkali metal alkoxide may also optionally be employed herein. The amount of amine catalyst can generally vary from about 0.02 to about 5 wt% of the reaction mixture. In any aspect or embodiment described herein, the amount of organometallic catalyst can generally vary from 0.001 to about 1 wt% of the reaction mixture.

In any aspect or embodiment described herein, the equivalent ratio of isocyanate groups to hydroxyl groups is about 2:1 to about 1:2, or about 1.5:1 to about 0.8:1, or about 1.2:1 to about 0.9:1.

In any aspect or embodiment described herein, branched or straight chain, saturated or unsaturated C₂₋₁₂, preferably C₂₋₆ alkane diols, can be used as chain extender compounds. In any aspect or embodiment described herein, exemplary chain extenders include ethylene glycol, propane-1,3-diol, propane-1,2-diol, butane-1,4-diol, butane-1,3-diol, butane-1,2-diol, 2-butene-1,4-diol, 2,2-dimethylpropane-1,3-diol, hexane-1,6-diol, octane-1,8-diol, decane-1,10-diol, and mixtures thereof. Alternatively, C₄₋₈ dialkylene glycols, for example, diethylene glycol and dipropylene glycol, as well as polyoxyalkylene glycols, may be used as chain extenders.

In any aspect or embodiment described herein, multifunctional polyols including ester groups (e.g., polyester polyols) can be used in polyester-melamine coatings to achieve improved hydrolytic stability, heat resistance and UV resistance, good mechanical properties, good adhesion on plastic, aluminum and steel substrates, enhanced chemical resistance, and reduced water uptake. For example, in any aspect or embodiment described herein, a polyester polyol can be crosslinked with a melamine resin, such as an alkyl-etherified melamine formaldehyde resin, to form a hard coating. In any aspect or embodiment described herein, examples of melamine resins include the CYMEL line of products commercially available from ALLNEX. In any aspect or embodiment described herein, the weight percent of the multifunctional polyol component in the composition is from about 20 to about 80 wt%, or about 40 to about 60 wt%.

In any aspect or embodiment described herein, the curing process can be catalyzed with acid catalysts. In any aspect or embodiment described herein, examples of catalysts include para-toluene sulfonic acid, methyl sulfonic acid, boric acid, phosphoric acid, sulfate acid, oxalic acid, sulfonic acids (such as dodecyl benzene sulfonic acid), and the like. In any aspect or embodiment described herein, the amount of catalyst is about 0.1 to about 10 wt%, or about 0.5 to about 5 wt%, based on the total amount of the melamine and multifunctional polyol used.

In any aspect or embodiment described herein, solvents can be added to lower the viscosity of the formulation. Any solvents known for polyester-melamine coating systems can be used here. In any aspect or embodiment described herein, examples of solvents include methyl isobutyl ketone, ethylene carbonate, n-butyl acetate, n-propyl acetate, and the like. In any aspect or embodiment described herein, conventional additives that are known for polyester-melamine coating systems can be added to the formulation based on the application. In any aspect or embodiment described herein, examples of conventional additives include antioxidants, pigments and fillers, rheology modifiers, processing aids, adhesion promoters, dispersants, light stabilizers, UV absorbers, and the like.

### Auxiliary Polyol Resins

In any aspect or embodiment described herein, the multifunctional polyols can also be used in combination with an auxiliary polyol to prepare polyurethane resins and melamine-based resins. In any aspect or embodiment described herein, auxiliary polyols include polyester polyols, polyether polyols, polycarbonate polyols, polyacrylate polyols, and polyols derived from natural sources (such as sucrose and castor oil).

As used herein "auxiliary polyester polyols" are polyesters which include at least two hydroxyl groups and are prepared by known processes, particularly by the polycondensation of hydroxycarboxylic acids or the polycondensation of aliphatic and/or aromatic polycarboxylic acids with dihydric or polyhydric alcohols. In any aspect or embodiment described herein, examples of auxiliary polyester polyols include those prepared from di- to trihydric alcohols such as, for example, 1,2-ethanediol, diethylene glycol, 1,2-propanediol, dipropylene glycol, 1,4-butanediol, 1,5-pentanediol, 1,6-hexanediol, neopentyl glycol, glycerol, 1,1,1-trimethylolpropane, or combinations thereof, with organic dicarboxylic acids or their anhydrides or esters, such as, for example, succinic acid, glutaric acid, adipic acid, trimethyladipic acid, suberic acid, azelaic acid, sebacic acid, dodecanedicarboxylic acid, maleic acid, fumaric acid, dimer fatty acid, phthalic acid, phthalic anhydride, isophthalic acid, terephthalic acid, dimethyl terephthalate, hexahydrophthalic acid, trimellitic acid, and trimellitic anhydride, or combinations thereof. In any aspect or embodiment described herein, examples of auxiliary polyester diols include polyester diols prepared from adipic acid, azelaic acid, sebacic acid, dodecanedicarboxylic acid, dimer fatty acid, phthalic acid, isophthalic acid, and terephthalic acid as dicarboxylic acid.

As used herein "auxiliary polyether polyols" include polymerization products of cyclic ethers, such as for, example, ethylene oxide, 1,2-propylene oxide, 1,2- or 2,3-butylene oxide, oxetane, tetrahydrofuran, or mixtures thereof, optionally polymerized with the aid of a starter molecule having two or more active hydrogen atoms, such as water, ammonia, for example, or compounds having two or more OH or NH groups such as, for example, 1,2-ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of the stated compounds. Examples of auxiliary polyether polyols include polyoxyethylene polyols and polyoxypropylene polyols, more particularly polyoxyethylene diols, polyoxypropylene diols, polyoxyethylene triols, and polyoxypropylene triols.

In any aspect or embodiment described herein, auxiliary polyether polyols can also be prepared by self-condensation of polyhydric alcohols. In any aspect or embodiment described herein, examples of suitable polyhydric alcohols are the same as described herein in relation to the multifunctional polyether polyols.

In any aspect or embodiment described herein, the polyurethane resins and melamine-based resins can also be prepared from a combination of a multifunctional polyol and an auxiliary polyacrylate polyol. In any aspect or embodiment described herein, the auxiliary polyacrylate polyols can be prepared by copolymerization of olefinically unsaturated monomers containing hydroxyl groups with hydroxyl-group-free olefinic monomers.

In any aspect or embodiment described herein, examples of suitable monomers for preparing the auxiliary polyacrylate polyols include vinyl and vinylidene monomers such as, for example, styrene, α-methylstyrene, o- and/or p-chlorostyrene, o-, m- or p-methylstyrene, p-tert-butylstyrene, acrylic acid, acrylonitrile, methacrylonitrile, acrylic and methacrylic esters of alcohols having up to 18 carbon atoms, such as methyl acrylate, ethyl acrylate, n-propyl acrylate, isopropyl acrylate, n-butyl acrylate, isobutyl acrylate, tert-butyl acrylate, amyl acrylate, hexyl acrylate, 2-ethylhexyl acrylate, isooctyl acrylate, 3,3,5-trimethylhexyl acrylate, stearyl acrylate, lauryl acrylate, cyclopentyl acrylate, cyclohexyl acrylate, 4-tert-butylcyclohexyl acrylate, isobornyl acrylate, methyl methacrylate, ethyl methacrylate, n-propyl methacrylate, isopropyl methacrylate, butyl methacrylate, isobutyl methacrylate, tert-butyl methacrylate, amyl methacrylate, hexyl methacrylate, 2-ethylhexyl methacrylate, isooctyl methacrylate, 3,3,5-trimethylhexyl methacrylate, stearyl methacrylate, lauryl methacrylate, cyclopentyl methacrylate, cyclohexyl methacrylate, 4-tert-butylcyclohexyl methacrylate, norbornyl methacrylate or isobornyl methacrylate, diesters of fumaric acid, itaconic acid or maleic acid with alcohols having 4 to 8 carbon atoms, acrylamide, methacrylamide, vinyl esters of alkanemonocarboxylic acids having 2 to 5 carbon atoms, such as vinyl acetate or vinyl propionate, hydroxyalkyl esters of acrylic acid or methacrylic acid having 2 to 5 carbon atoms in the hydroxyalkyl radical, such as 2-hydroxyethyl, 2-hydroxypropyl, 3-hydroxypropyl, 3-hydroxybutyl, 4-hydroxybutyl, trimethylolpropane monoacrylate or monomethacrylate or pentaerythritol monoacrylate or monomethacrylate, and also any desired mixtures of such exemplified monomers.

As used herein, "auxiliary caprolactone polyols" means a homopolymer, copolymer or mixture thereof, obtainable by polymerizing a composition comprising caprolactone, preferably ε-caprolactone, and then reacting the polycaprolactone with a chain extender.

In any aspect or embodiment described herein, co-polymerization may include the co-polymerization of caprolactone, particularly ε-caprolactone, either with a co-monomer or diluent that is not a caprolactone, or with a mixture of different caprolactones, for example, substituted and unsubstituted caprolactones or a mixture of caprolactones having different substituents.

In any aspect or embodiment described herein, substituted ε-caprolactone monomers that may be used in the production of the caprolactone polyols include C₁₋₁₂ alkyl substituted ε-caprolactone, C₁₋₁₂ alkenyl substituted ε-caprolactone, C₁₋₁₂ alkynyl substituted ε-caprolactone, C₁₋₁₈ cycloalkyl substituted ε-caprolactone, C₁₋₁₂ alkoxy substituted ε-caprolactone, C₁₋₁₈ aryl substituted ε-caprolactone, C₁₋₁₈ alkaryl substituted ε-caprolactone, C₁₋₁₈ aralkyl substituted ε-caprolactone, C₁₋₁₈ aryloxy substituted ε-caprolactone, and mixtures thereof.

In any aspect or embodiment described herein, substituted ε-caprolactone monomers that may be used in the production of the auxiliary caprolactone polyols include mono-, di- or tri-substituted monomers. In any aspect or embodiment described herein, exemplary substituted ε-caprolactone monomers include monomethyl ε-caprolactone, monoethyl ε-caprolactone, monopropyl ε-caprolactone, monomethoxy ε-caprolactone, monoethoxy ε-caprolactone, monopropoxy ε-caprolactone, monobenzyl ε-caprolactone, monophenyl ε-caprolactone, dimethyl ε-caprolactone, diethyl ε-caprolactone, dipropyl ε-caprolactone, dimethoxy ε-caprolactone, diethoxy ε-caprolactone, dipropoxy ε-caprolactone, dibenzyl ε-caprolactone, diphenyl ε-caprolactone, and mixtures thereof.

In any aspect or embodiment described herein, the auxiliary polycaprolactone polyols can be derived from caprolactone monomers and chain extenders. In any aspect or embodiment described herein, chain extenders include alkane diols, dialkylene glycols, polyalkylene polyols, and crosslinking agents, such as trihydric or tetrahydric alcohols, oligomeric polyalkylene polyols and mixtures thereof.

In any aspect or embodiment described herein, the auxiliary caprolactone polyol has a molecular weight in the range of about 400 to about 90000, more preferably about 500 to about 50000, more preferably, about 540 to about 5000. In any aspect or embodiment described herein, the auxiliary caprolactone polyol produced by the esterification reaction preferably has a polydispersity, measured by Gel Permeation Chromatography, of 1 to 2. Exemplary commercially available caprolactone polyols include CAPA 8025D, CAPA8015D, and CAPA2101, each available from INGEVITY.

In any aspect or embodiment described herein, the multifunctional polyols can also be used in combination with an auxiliary polyol derived from natural oils to prepare polyurethane resins and/or melamine-based resins. In any aspect or embodiment described herein, natural oils comprise triglycerides of saturated and unsaturated fatty acids. In any aspect or embodiment described herein, sources for polyols that are derived from natural oils include soybean oil, canola oil, tall oil, safflower oil, linseed oil, castor oil, corn oil, sunflower oil, olive oil, sesame oil, cottonseed oil, palm-based oils, rapeseed oil, tung oil, peanut oil, jatropha oil, and combinations thereof.

In any aspect or embodiment described herein, castor oil is a naturally occurring polyol that can be used to make polyurethane resins and/or melamine-based resins. Other natural oils need to be chemically modified to introduce sufficient hydroxyl content to make them useful in the production of polyurethane polymers. There are two chemically reactive sites that can be considered when attempting to modify natural oil or fat into a useful polyol: a) the unsaturated sites (double bonds); and b) the ester functionality. In any aspect or embodiment described herein, unsaturated sites present in oil or fat can be hydroxylated via epoxidation/ring opening or hydroformylation/hydrogenation. Alternatively, in any aspect or embodiment described herein, trans-esterification can also be utilized to introduce OH groups in natural oil and fat.

In any aspect or embodiment described herein, the chemical process for the preparation of natural polyols using epoxidation involves a reaction mixture that includes an epoxidized natural oil, a ring opening acid catalyst, and a ring opener. In any aspect or embodiment described herein, epoxidized natural oils include epoxidized plant-based oils (e.g., epoxidized vegetable oils) and/or epoxidized animal fats. In any aspect or embodiment described herein, the epoxidized natural oils may be fully or partially epoxidized. In any aspect or embodiment described herein, the natural or epoxidized natural oils include soybean oil, corn oil, sunflower oil, olive oil, canola oil, sesame oil, palm oil, rapeseed oil, tung oil, cotton seed oil, safflower oil, peanut oil, linseed oil and combinations thereof. Animal fats include fish, tallow and lard. In any aspect or embodiment described herein, the natural oils or epoxidized natural oils are triglycerides of fatty acids that may be saturated or unsaturated with various chain lengths from C12 to C24. These acids can be: 1) saturated (e.g., lauric, myristic, palmitic, steric, arachidic, and/or lignoceric); 2) mono-unsaturated (e.g., palmitoleic and/or oleic); and/or 3) poly-unsaturated (e.g., linoleic, linolenic, and/or arachidonic).

In any aspect or embodiment described herein, partially or fully epoxidized natural oil may be prepared when reacting peroxyacid under suitable reaction conditions. In any aspect or embodiment described herein, the ring opening of the epoxidized oils with alcohols, water, and other compounds having one or multiple nucleophilic groups can be used to generate the hydroxyl functionality. In any aspect or embodiment described herein, ring opening yields natural oil polyol that can be used for the manufacture of polyurethane resins.

In any aspect or embodiment described herein, in the hydroformylation/hydrogenation process, the oil is hydroformylated in a reactor filled with a hydrogen/carbon monoxide mixture in the presence of a suitable catalyst (e.g., cobalt or rhodium) to form an aldehyde which is hydrogenated in the presence of cobalt or nickel catalyst to form a polyol. Alternatively, in any aspect or embodiment described herein, polyols form natural oil and/or fats can be produced by trans-esterification with a suitable poly-hydroxyl containing substance using an alkali metal or alkali earth metal base or salt as a trans-esterification catalyst. In any aspect or embodiment described herein, any natural oil, or alternatively any partially hydrogenated oil, can be used in the transesterification process. In any aspect or embodiment described herein, examples of oils include, but are not limited to, soybean, corn, cottonseed, peanut, castor, sunflower, canola, rapeseed, safflower, fish, seal, palm, tung, olive oil or any blend. In any aspect or embodiment described herein, any multifunctional hydroxyl compound can also be used (e.g., lactose, maltose, raffinose, sucrose, sorbitol, xylitol, erythritol, mannitol, or any combination).

In any aspect or embodiment described herein, the polyurethane and/or melamine curable compositions can be provided in the form of a multi-part kit (e.g., two-part kits, for example, Parts A and B). In any aspect or embodiment described herein, the first part (Part A) include the multifunctional polyol resin(s) and optionally the auxiliary polyol resin(s). In any aspect or embodiment described herein, the second part (Part B) includes isocyanates or blocked isocyanates (for polyurethane resins) or melamine (for melamine-based resins). In any aspect or embodiment described herein, the catalyst can be present in either part. In any aspect or embodiment described herein, the catalyst is present in the polyol portion (e.g., Part A).

In any aspect or embodiment described herein, to form a cured composition (e.g., thermoset), the polymeric resin(s) described herein are combined with a cross-linking agent. As used herein, the term "cross-linking agent" encompasses compounds whose roles in curing are variously described as those of a hardener, a hardening accelerator, a crosslinking agent, a curing catalyst, a curing co-catalyst, and a curing initiator, among others. The cross-linking agent is one which is capable of reacting with the active hydrogens (e.g., hydrogens of -OH and -COOH groups) in the multifunctional polyol to give a thermoset composition upon curing. In any aspect or embodiment described herein, the ratio of the active hydrogen-containing resin to the crosslinking agent ranges from about 1:99 to about 99:1, generally from about 1:9 to about 9:1. In any aspect or embodiment described herein, crosslinking agent(s) used with the above-described polyols is selected from aminoplast resins and phenoplast resins (e.g., aminoplast resins).

Aminoplast resins are based on the addition products of formaldehyde, with an amino- or amido-group carrying substance. Condensation products obtained from the reaction of alcohols and formaldehyde with melamine, urea, or benzoguanamine are most common. However, condensation products of other amines and amides can also be employed, for example, aldehyde condensates of triazines, diazines, triazoles, guanadines, guanamines and alkyl- and aryl-substituted derivatives of such compounds, including alkyl- and aryl-substituted ureas and alkyl- and aryl-substituted melamine-based resins. Some examples of such compounds are N,N' -dimethyl urea, benzourea, dicyandimide, formaguanamine, acetoguanamine, glycoluril, ammeline, 2-chloro-4,6-diamino-1,3,5-triazine, 6-methyl-2,4-diamino-1,3,5-triazine, 3,5-diaminotriazole, triaminopyrimidine, 2-mercapto-4,6-diaminopyrimidine, 3,4,6-tris(ethylamino)-1,3,5-triazine, and the like.

While the aldehyde employed is most often formaldehyde, other similar condensation products can be made from other aldehydes, such as, but not limited to, acetaldehyde, crotonaldehyde, acrolein, benzaldehyde, furfural, glyoxal and the like.

The aminoplast resins contain methylol or similar alkylol groups, and in most instances at least a portion of these alkylol groups are etherified by a reaction with an alcohol to provide organic solvent-soluble resins. In any aspect or embodiment described herein, any monohydric alcohol can be employed for this purpose, including alcohols, such as methanol, ethanol, propanol, butanol, pentanol, hexanol, heptanol and others, as well as benzyl alcohol and other aromatic alcohols, cyclic alcohol such as cyclohexanol, monoethers of glycols such as cellosolves and carbitols, and halogen-substituted or other substituted alcohols, such as 3-chloropropanol and butoxyethanol. In any aspect or embodiment described herein, aminoplast resins are substantially alkylated with methanol or butanol. In any aspect or embodiment described herein, the selected aminoplasts are melamine-, urea- or benzoguanamine-formaldehyde condensates etherified with an alcohol containing 1 to 4 carbon atoms such as methanol, ethanol, butanol or mixtures thereof. Suitable commercially available products include RESIMENE products available from Ineos or CYMEL products available from Cytec.

In any aspect or embodiment described herein, phenolic resins (i.e., phenoplasts) useful as curing agents are typically formed by the condensation of an aldehyde and a phenol. The most used aldehyde is formaldehyde, although other aldehydes, such as acetaldehyde, can also be employed. In any aspect or embodiment described herein, methylene-releasing and aldehyde-releasing agents such as paraformaldehyde and hexamethylene tetramine, can be utilized as the aldehyde agent if desired. In any aspect or embodiment described herein, various phenols can be used; for instance, the phenol employed can be phenol per se, a cresol, or a substituted phenol in which a hydrocarbon radical having a straight chain, a branched chain or a cyclic structure is substituted for hydrogen in the aromatic ring. In any aspect or embodiment described herein, mixtures of phenols are also often employed. In any aspect or embodiment described herein, some specific nonlimiting examples of phenols utilized to produce these resins include p-phenylphenol, p-tert-butylphenol, p-tert-amylphenol, cyclopentylphenol and unsaturated hydrocarbon-substituted phenols, such as the monobutenyl phenols containing a butenyl group in ortho, meta or para position, and where the double bond occurs in various positions in the hydrocarbon chain. In any aspect or embodiment described herein, a common phenolic resin is phenol formaldehyde.

In any aspect or embodiment described herein, the isocyanates useful in the disclosed compositions are aliphatic, aromatic isocyanates or polyisocyanates or resins with terminal isocyanate groups. In any aspect or embodiment described herein, the resins may be monomeric or polymeric isocyanates. In any aspect or embodiment described herein, monomeric isocyanates include: toluene diisocyanate (TDI), diphenylmethane diisocyanate (MDI), 1,6-hexamethylene diisocyanate (HDI), phenyl isocyanate, 4,4' -dicyclohexylmethane diisocyanate, isophorone diisocyanate(IPDI), meta-tetramethylxylene diisocyanate (TMXDI), nonanetriisocyanate (TTI) or vinyl isocyanate, or the like. The above monomeric isocyanates are those which are more commonly used and are not meant to be exclusive. In any aspect or embodiment described herein, the polymeric polyisocyanates useful in the disclosure are isocyanurate, allophanate, or biuret compounds and polyurethane products derived from the monomeric diisocyanates as listed herein. Also useful in any aspect or embodiment described herein are addition products of monomeric isocyanates with polyester and polyether polyols containing terminal isocyanate groups.

In any aspect or embodiment described herein, the blocked isocyanate crosslinkers useful in the inventions described herein are aromatic or aliphatic isocyanates with a blocking group, which can be removed. In any aspect or embodiment described herein, the deblocking to the isocyanate is a displacement reaction, wherein the blocking group is displaced with another group. In any aspect or embodiment described herein, blocking groups for the isocyanate are selected from the group including malonates, triazoles, ε-caprolactam, phenols, ketoxime, pyrazoles, alcohols, glycols, glycol ethers, and uretdiones.

In any aspect or embodiment described herein, suitable catalysts for crosslinking with melamine resins commonly used are sulfonic acid-based catalysts or phosphoric acid derivatives (e.g., diphenyl phosphite), such as from about 0.5 to about 5 wt%, based on the total weight of the formulation.

In any aspect or embodiment described herein, exemplary sulfonic acid catalysts are or includes dodecylbenzenesulfonic acid (DDBSA), dinonyl naphthalene monosulfonic acid(DNNSA) dinonylnaphthalene disulfonic acid (DNNDSA), para-toluenesulfonic acid (p-TSA), as well as blocked sulfonic acid catalysts (e.g., blocked DDBSA, blocked DNNSA, blocked DNNDSA or blocked p-TSA).

In any aspect or embodiment described herein, as blocked sulfonic acid catalysts, preference is given to using amine- or covalently blocked sulfonic acid catalysts in order to ensure the stability and the durability of the coating systems. For blocking the sulfonic acid catalysts, in any aspect or embodiment described herein, tertiary alkylated or heterocyclic amines are preferably used as amines, for example 2-amino-2-methylpropanol, diisopropanolamine, dimethyloxazolidine or trimethylamine. As covalently binding blocking agent, for example, epoxy or epoxy-isocyanate compounds, or esters are used. Such blocked sulfonic acid catalysts are described in detail in the patent publication U.S. Patent No. 5,102,961.

In any aspect or embodiment described herein, curable compositions can include the multifunctional polyols and optionally, an auxiliary resin as described herein. In any aspect or embodiment described herein, the ratio of multifunctional polyol resin to auxiliary resin in the curable compositions can range from about 10:90 to about 90:10, from about 20:80 to about 80:20, about 25:75 to about 75:25, about 30:70 to about 70:30, about 35:65 to about 65:35, about 40:60 to about 60:40, about 45:55 to about 55:45, or can be about 50:50.

In any aspect or embodiment described herein, when, included in a multi-part kit, the cured compositions (i.e., thermosets) can be prepared by mixing Parts A and B immediately prior to application to the substrate. In any aspect or embodiment described herein, the equivalent ratio of isocyanate groups to hydroxyl groups is about 4:1 to about 1:2, or about 1.5:1 to about 1:1.3. In any aspect or embodiment described herein, solvents can be added to the individual components to lower the viscosity of the composition. In any aspect or embodiment described herein, suitable solvents include methylethyl ketone, methylisobutyl ketone, ethyl acetate, butyl acetate, ethylene glycol monoethylether acetate, methoxypropyl acetate, toluene, xylene, spirit, or a combination of these solvents. In any aspect or embodiment described herein, other optional additives (such as plasterers, catalysts, pigments and fillers, flowing control agents, wetting agents, thickeners, light stabilizers, and UV absorbers) can be added to the individual components or the mixture prior to application.

In any aspect or embodiment described herein, the curable compositions can further comprise an additive, wherein the additive is a flow control agent, dry flow agent, antioxidant, pigment, dye, optical brightener, extender, heat stabilizer, light stabilizer, ultraviolet light stabilizer, ultraviolet light-absorbing compound, near infrared light-absorbing compound, infrared light-absorbing compound, plasticizer, lubricant, antistatic agent, anti-fog agent, antimicrobial agent, radiation stabilizer, flame retardant, anti-drip agent, fragrance, or a combination thereof. In any aspect or embodiment described herein, any additive is used in an amount generally known to be effective, which can be from about 0.001 to about 10 parts by weight, per 100 parts by weight of the total amount of epoxy resin in the curable composition For example, in any aspect or embodiment described herein, the total amount of the additives (other than any filler or pigment) can be about 0.01 to about 20 parts by weight, or about 1 to about 10 parts by weight, per 100 parts by weight of the total amount of epoxy resin in the curable composition.

In any aspect or embodiment described herein, the curable compositions have a bio-content. The bio-content as used herein, refers to the weight of the bio-based component divided by the total weight of the composition. In any aspect or embodiment described herein, the bio-content can range from about 5 to about 40%, about 10 to about 35%. about 10 to about 30%, about 20 to about 40%, about 20 to about 35%, or about 20 to about 30%.

In any aspect or embodiment described herein, the cured compositions of the present disclosure are useful for coatings, adhesives, composites, electronic encapsulations, and electrical potting materials.

In any aspect or embodiment described herein, the polyurethane resins of the present disclosure are useful as coatings, such as for example, controlled release fertilizers and pesticides. In any aspect or embodiment described herein, the melamine-based resins of the present disclosure are useful as coatings, such as for example, controlled release fertilizers and pesticides.

The details of the examples are contemplated as further embodiments of the described methods and compositions. Therefore, the details as set forth herein are hereby incorporated into the detailed description as alternative embodiments.

### Examples

### Example 1. Synthesis of Epoxide of TOFA

A solution was prepared from the tall oil fatty acid (200 g, available as INGEVITY ALTAPYNE L5) and 1.5 g of tetrabutylammonium bromide (TBAB) in 200 mL of toluene. The solution was transferred to an addition funnel and added dropwise to epichlorohydrin ("ECH," 79 g, 1.2 molar equivalent, based on TOFA) over 2 h at 110 °C. The acid number was measured to monitor the reaction progression. After the acid number was below 4 mg KOH/g the halohydrin product was cooled to room temperature. For the ring closure, isopropyl alcohol (IPA, 47 g) was added, followed by the addition of aq. KOH (96 g, aq. 45 wt%) while maintaining the temperature below 30 °C. The reaction proceeded for 30 mins. The reaction mixture was filtered and the filtrate was neutralized with aq. acid. The filtrate was extracted with organic solvent (such as toluene), washed with water and then brine. The organic layer was concentrated by evaporation to provide the crude product in an 85 % yield. Analysis by GPC indicated the formation of the product. The epoxy equivalent weight (EEW) was 460 as determined by titration with perchloric acid in acetic acid.

### Example 2. Epoxide of Disproportioned Resin

Disproportioned rosin (1212 g, ALTAPYNE 505) was charged to a 3 L flask and 800 ml toluene was used to dissolve the rosin. Then 3 g triphenylphosphine was added to catalyze the reaction. After that, ECH (414 g, 1.21 eq.) was added dropwise over 1 hour at 95 °C and the reaction proceeded for total of 8 hours. The reaction was monitored by GPC and acid value. When the acid number of reaction mixture was below 5 mg KOH/g, the reaction mixture was cooled to room temperature.

To the cooled reaction mixture was added aq. KOH (538 g, 45 wt%). The reaction mixture was diluted by 25% with DI water along with small amount of water-soluble organic solvent such as methanol and stirred at room temperature for 8 hours. The reaction was monitored by GPC and epoxy equivalent weight (EEW). The glycidyl ester product was obtained a quantitative yield having 80% purity as determined by GPC. The EEW of the product was 505, as determined by titration with perchloric acid in acetic acid.

### Example 3: Epoxidation of DTO

A solution of DTO (507 g, INGEVITY ALTAPYNE M-28B) and TBAB (4.0 g) in 300 mL of toluene was prepared, transferred to an addition funnel, and added dropwise to 245 g of ECH at 100 °C. The acid number was measured to monitor the reaction progression. After the acid number was below 1 mg KOH/g the halohydrin intermediate was cooled to room temperature. Then, IPA (159 g) was added, followed by the addition of aq. KOH (324 g, 45 wt%) while maintaining the temperature below 30 °C. The reaction proceeded for 30 mins. The reaction mixture was filtered and the filtrate was neutralized with aq. acid. The filtrate was extracted with toluene, washed sequentially with water and then brine. The organic layer was concentrated by evaporation to provide the crude glycidyl ester product in an 84 % yield. Analysis by GPC indicated the formation of the product. The EEW was 660, as determined by titration with perchloric acid in acetic acid.

### Example 4: Diepoxide of Diacid 1550

A solution of (212 g, INGEVITY Diacid 1550) and TBAB (3.0 g) in 200 mL of toluene was prepared, transferred to an addition funnel, and added dropwise to ECH (142 g, 1.2 molar equivalent per carboxylic acid group) at 110 °C. The acid number was measured to monitor the reaction progression. After the acid number was below 1 mg KOH/g the halohydrin intermediate was cooled down to room temperature. Then, IPA (92 g) was added to the halohydrin intermediate reaction mixture and stirred thoroughly. It was followed by the addition of aq. KOH (187 g, 45 wt%) while maintaining the temperature below 30 °C. The reaction proceeded for 30 mins and the reaction mixture was filtered. The filtrate was neutralized with aq. acid and extracted with toluene. The organic layer was washed sequentially with water and then brine and dried over MgSO₄. After filtration, the filtrate was concentrated by solvent evaporation. The yield of epoxide product was 87 %. Analysis by GPC indicated the formation of the product. The EEW was 410.

### Example 5: Triepoxide of Fumarated TOFA

Fumarated TOFA (166 g, INDULIN 201) and TBAB (0.4 g) was mixed with 80 mL toluene and ECH (107 g, 1.16 eq. per carboxylic acid group) was added slowly. The solution was heated to 95 °C then 100 °C for 6 hours. The acid number was measured to monitor the reaction progression. After the acid number was 3 mg KOH/g, the halohydrin intermediate reaction mixture was cooled to room temperature.

Aq. KOH (85 g, 45 wt%), IPA (25 g), and DI water (45 g) were added to the reaction mixture. After 1 hour, additional aq. KOH (31 g, 45 wt%) was added and mixed for 30 min. The bottom aqueous layer was removed, the top layer was washed with water (1/2 organic/water) and allowed to settle overnight. The organic layer was allowed to sit overnight. The solvent was removed from the organic layer to provide the epoxide product in an 85% yield having 75% purity by GPC. The EEW was 478.

### Example 6: Triepoxide of Fumarated Rosin Acid

Fumarated rosin acid (1279 g Stafor size adduct) was added to a 3L flask, then 630 g toluene was added to dissolve the product. The acid number was measured 252.5 mg KOH/g. ECH (620 g, 1.2 eq. per carboxylic acid group) was added dropwise over 2 h at 90 °C. The reaction was then stirred at 100 °C for 8 hours. When acid number was 5 mg KOH/g the reaction mixture was cooled to room temperature. Then KOH pellets (375 g) were added, followed by the addition of 200 g of water, and the reaction proceeded at room temperature for 8 hours. The bottom aqueous layer was removed, the top layer was washed with water (1/2 organic/water) and allowed to settle overnight. The organic layer was allowed to sit overnight. The organic layer was then vacuum stripped to remove solvent to provide an 80% yield, having a purity of 65% by GPC. The EEW was 455.

### Example 7: Epoxide of Dimer Acid

Rosin dimer (74 g, ALTAPYNE 595) with an acid number of 226 was charged to a 500 mL flask and ECH (41 g, 1.5 eq. per carboxylic acid group) was added along with 100 mL toluene and 0.35 g TBAB as catalyst and heated to 105 °C for 6 hours. The acid number was measured to monitor the reaction progression. The acid number was 5 mg KOH/g after 10 hours and cooled to room temperature. Aq. KOH (55 g, 45 wt%) was added along with 20 g DI water and 25 g isopropanol. The reaction mixture was stirred at room temperature for 2 hours and according to GPC, the reaction was complete. The bottom aqueous layer was removed and the top layer was washed with water (1/2 org /water) and allowed to settle overnight. The organic layer was then concentrated to remove the solvent to provide an 80% yield having a purity of about 75% by GPC. The EEW was 556.

### Example 8: Preparation of Rosin-based Polyol from of Rosin Epoxide with Water

To the rosin epoxide from Example 2 (850 g) was added 400 mL toluene, 200 mL methanol, 200 g water, and 30 g concentrated H₂SO₄. The reaction mixture was heated to 75 °C for 1 hour. GPC analysis showed that all of the epoxy groups had been converted to diol. The crude product was washed with 15 g NaHCO₃ in 200 mL water and the organic layer was concentrated to remove the solvent and the nitrogen-sparged to remove residual solvent and water. The diol product was obtained in a 90% yield.

### Example 9: Preparation of Rosin-based Polyol from Rosin Epoxide with Diethanolamine

To the rosin epoxide (452 g, Example 2) was added diethanolamine (98 g) with 0.2 g triphenylphosphine as catalyst. The reaction mixture was heated at 90 °C for 2 hours until complete conversion of the epoxide to the DTO triol. No additional separation process was carried out. Quantitative yield was achieved.

### Example 10. Preparation of Bio-based Polyol Derived from DTO and Trimethylolpropane Triglycidyl Ether

398 g of DTO M-50B (trade name: ALTAPYNE M-50B; from Ingevity; containing about 50% rosin acids and 50% tall oil fatty acids) and 364 g of trimethylolpropane triglycidyl ether (technical grade; from Sigma) are charged into a reaction vessel equipped with temperature probe, nitrogen inlet and mechanical stirrer. The reaction mixture is heated to 100 °C and then 1.6 g of triphenyl phosphine is charged. After the exothermic peak, the reaction mixture is cooled down to 125 °C and maintained at that temperature until an acid number ≤ 1 is reached. The reaction product is a viscous amber liquid with an EEW value of 623. The bio-content of this DTO-epoxy resin is about 52%.

### Example 11. Preparation of Bio-based Polyol Derived from DTO and Bisphenol A Diglycidyl Ether

366 g of DTO M-50B (trade name: ALTAPYNE M-50B; from Ingevity; containing about 50% rosin acids and 50% tall oil fatty acids) and 415 g of bisphenol A diglycidyl ether (trade name: EPON 828; from Hexion) are charged into a reaction vessel equipped with temperature probe, nitrogen inlet and mechanical stirrer. The reaction mixture is heated to 100 °C and then 1.4 g of triphenyl phosphine (from Sigma) is charged. After the exothermic peak, the reaction mixture is cooled down to 125 °C and maintained at that temperature until an acid number ≤ 1 is reached. The reaction product is a viscous amber liquid with an EEW value of 690. The bio-content of this DTO-epoxy resin is about 47%.

### Example 12. Preparation of Bio-based Polyol Derived from DTO and Bisphenol A Diglycidyl Ether

366 g of DTO M-28B (trade name: ALTAPYNE M-28B; from Ingevity; containing about 28% rosin acids and 78% tall oil fatty acids) and 463 g of bisphenol A diglycidyl ether (trade name: EPON 828; from Hexion) are charged into a reaction vessel equipped with temperature probe, nitrogen inlet and mechanical stirrer. The reaction mixture is heated to 100 °C and then 1.4 g of triphenyl phosphine (from Sigma) is charged. After the exothermic peak, the reaction mixture is cooled down to 125 °C and maintained at that temperature until an acid number ≤ 1 is reached. The reaction product is a viscous amber liquid with an EEW value of 666. The bio-content of this DTO-epoxy resin is about 44%.

### Example 13. Preparation of Bio-based Polyol Derived from DTO, Trimethylolpropane Triglycidyl Ether, Epoxy Novolac Resin

366 g of DTO M-28B (trade name: ALTAPYNE M-28B; from Ingevity; containing about 28% rosin acids and 78% tall oil fatty acids), 225 g of trimethylolpropane triglycidyl ether (technical grade; from Sigma) and 280 g of Epoxy Novolac Resin (trade name: D.E.N. 438; from Olin) are charged into a reaction vessel equipped with temperature probe, nitrogen inlet and mechanical stirrer. The reaction mixture is heated to 100 °C and then 1.4 g of triphenyl phosphine (from Sigma) is charged. After the exothermic peak, the reaction mixture is cooled down to 125 °C and maintained at that temperature until an acid number ≤ 1 is reached. The reaction product is a viscous amber liquid with an EEW value of 463. The bio-content of this DTO-epoxy resin is about 41%.

### Example 14. Preparation of Bio-based Polyol Derived from DTO, Bisphenol A Diglycidyl Ether and Epoxy Novolac Resin

337 g of DTO M-28B (trade name: ALTAPYNE M-28B; from Ingevity; containing about 28% rosin acids and 78% tall oil fatty acids), 258 g of Epoxy Novolac Resin (trade name: DEN 438; from Olin) and 258 g of bisphenol A diglycidyl ether (trade name: EPON 828; from Hexion) are charged into a reaction vessel equipped with temperature probe, nitrogen inlet and mechanical stirrer. The reaction mixture is heated to 100 °C and then 1.3 g of triphenyl phosphine (from Sigma) is charged. After the exothermic peak, the reaction mixture is cooled down to 125 °C and maintained at that temperature until an acid number ≤ 1 is reached. The reaction product is a viscous amber liquid with an EEW value of 502. The bio-content of this DTO-epoxy resin is about 42%.

### Example 15. Preparation of Bio-based Polyol Derived from DTO and Bisphenol A Diglycidyl Ether

2319 g of DTO M-28B (trade name: ALTAPYNE M-28B; from Ingevity; containing about 28% rosin acids and 78% tall oil fatty acids) and 1500 g of bisphenol A diglycidyl ether (trade name: EPON 828; from Hexion) are charged into a reaction vessel equipped with temperature probe, nitrogen inlet and mechanical stirrer. The molar ratio of bisphenol A diglycidyl ether to the biobased component is about 1:2, so that each glycidyl ether group reacts with a carboxylic acid group (i.e., rosin acid and/or fatty acid). The reaction mixture is heated to 100 °C and then 5 g of triphenyl phosphine (from Sigma) is charged. After the exothermic peak, the reaction mixture is cooled down to 130 °C and maintained at that temperature until an acid number ≤ 0.5 is reached. The reaction product is a diol with a hydroxyl value about 120. The bio-content of this DTO-based diol resin is about 60%.

### Example 16. Preparation of Bio-based Polyol Derived from DTO and Bisphenol A Diglycidyl Ether

1276 g of DTO M-50B (trade name: ALTAPYNE M-50B; from Ingevity; containing about 50% rosin acids and 50% tall oil fatty acids) and 800 g of bisphenol A diglycidyl ether (trade name: EPON 828; from Hexion) are charged into a reaction vessel equipped with temperature probe, nitrogen inlet and mechanical stirrer. The molar ratio of bisphenol A diglycidyl ether to the biobased component is about 1:2, so that each glycidyl ether group reacts with a carboxylic acid group (i.e., rosin acid and/or fatty acid). The reaction mixture is heated to 100 °C and then 3.1 g of triphenyl phosphine is charged. After the exothermic peak, the reaction mixture is cooled down to 130 °C and maintained at that temperature until an acid number ≤ 0.5 is reached. The reaction product is a diol with a hydroxyl value about 120. The bio-content of this DTO-based diol resin is about 61%.

### Example 17: Preparation of Polyester Polyol Derived from the Rosin-based Polyol of Example 8

98 g of the rosin-based resin prepared in Example 9, 264 g of 3-methyl-1,5-pentanediol and 288 g of adipic acid are charged into a reaction vessel equipped with temperature probe, nitrogen inlet and mechanical stirrer. The reaction mixture is gradually heated to 200 °C and the esterification is conducted in a nitrogen atmosphere at the normal pressure. Water generated from the esterification reaction is distilled off from the system. When less water is distilled off from the system, 9 mg of titanium isopropoxide catalyst is charged and the esterification reaction is continued under reduce pressure. The extra 3-methyl-1,5-pentanediol is also distilled off under the reduced pressure. The final product is a polyester diol having a number average molecular weight about 2200, viscosity at room temperature: 8300 cps.

### Example 18: Preparation of Polyester Polyol Derived from the Bio-based Polyol of Example 15

234 g of the DTO-based polyol prepared in Example 15, 166 g of 3-methyl-1,5-pentanediol 192 g of adipic acid are charged into a reaction vessel equipped with temperature probe, nitrogen inlet and mechanical stirrer. The reaction mixture is heated to 200 °C and the esterification is conducted in a nitrogen atmosphere at the normal pressure. Water generated from the esterification reaction is distilled off from the system. When less water is distilled off from the system, 8 mg of titanium isopropoxide catalyst is charged and the esterification reaction is continued under reduced pressure. The extra 3-methyl-1,5-pentanediol is also distilled off under the reduced pressure. The final product is a polyester diol having a number average molecular weight about 2000. Viscosity at 50 °C: 2170 cps

### Example 19: Preparation of Polycaprolactone Polyol Derived from the Rosin-based Polyol of Example 8

60 g the rosin-based polyol prepared in Example 8, 240 g of ε-caprolactone and 1 g of stannous octoate are charged into a reaction vessel equipped with temperature probe, nitrogen inlet and mechanical stirrer. The reaction mixture is heated to 150 °C and the ring-opening polymerization is conducted in a nitrogen atmosphere at the normal pressure for 3 hours. The final product is a polycaprolactone diol having a number average molecular weight about 2000.

### Example 20: Preparation of Polyether Polyol Derived from the Rosin-based Polyol of Example 8 and 1,6-hexanediol

120 g of the rosin-based polyol of Example 8, 180 g of 1,6-hexanediol, 3 g of sulfuric acid and 300 ml of toluene are charged into a reaction vessel equipped with temperature probe, nitrogen inlet and mechanical stirrer. The reaction mixture is heated to 160 °C. The reaction is conducted for 12 hours and water is distilled off. After cooling to 90 °C, the reaction mixture is stirred for 3 hours with 1 liter of water. After neutralization with 20% sodium hydroxide, all volatile contents are distilled off at a reduced pressure. Sodium sulfate is separated from the mixture by filtration under pressure. The final product is a polyether diol having a number average molecular weight about 1000.

### Example 21: Preparation of Polycarbonate Polyol Derived from the Rosin-based Polyol of Example 8 and Dimethyl Carbonate

40.36 g of derived from the rosin-based polyol of Example 8, 68.4 g of DMC and 0.2 g of titanium tetrabutoxide are charged into a reaction vessel equipped with temperature probe, nitrogen inlet and mechanical stirrer. The reaction mixture is heated to 160 °C and stirred for 10 hours at normal pressure. Methanol and DMC are distilled off. Then the reaction mixture is heated to 160 °C and the reaction is conducted at reduced pressure for 7 hours while methanol and DMC are continuously distilled out. The final product is a polycarbonate diol having a number average molecular weight about 2000.

### Example 22: Preparation of Polyurethane from the Polyester Polyol of Example 17

40.5 g of 4,4'-methylene diphenyl diisocyanate (MDI) is charged into a reaction vessel equipped with temperature probe, nitrogen inlet and mechanical stirrer and heated to 60 °C. 200 g of the polyester from Example 17 is preheated to 80 °C and then slowly charged to the reaction vessel. The mixture is heated to 80 °C and stirred under a dry nitrogen sparge for 1.5 hours. 20 g of 1,4-butanediol is then charged to the reaction vessel. The mixture is mixed to a homogenous state and then placed in a vacuum chamber to remove bubbles. The mixture is then poured into a preheated mould and placed in 120 °C oven until the polyurethane product can be demoulded. The demoulded polyurethane product is then returned to the oven at 120 °C to post-cure for 15 hours to obtain the final product.

### Example 23: Preparation of 2K Polyurethane Coating Derived from a Polyester Polyol of Example 17

A 2K polyurethane clear coat formulation is prepared by mixing 200 g of the polyester polyol from Example 17, 80g of tert-butyl acetate (solvent) and 0.3 g of dibutyltin dilaurate (catalyst) as Part A and 32.5g of PAPI 2027 (a polymeric MDI from Sigma) as Part B. The NCO:OH ratio is about 1.2:1. Part A and Part B are mixed and then sprayed onto an aluminum substrate and cured at 80 °C for 45 minutes.

### Example 24: Preparation of Polyester-melamine Coating Derived from a Polyester Polyol of Example 17

A polyester-melamine coating is formulated by mixing 30 g of the polyester polyol from Example 17 with 60 g of mixed solvents (24 g of methyl isobutyl ketone, 16 g of ethylene carbonate, 24 g of n-butyl acetate), 24 g of titanium dioxide (pigment), 12 g of Cymel 303 (melamine-based resin from Allnex) and 0.3 g of CYCAT 4045 (acid catalyst from Allnex). The coating is applied on am aluminum substrate and cured at 220 °C for 5 minutes. The coating thickness is about 30 microns.

### Exemplary Embodiments

In any aspect or embodiment described herein, a multifunctional polyol resin obtained from a reaction mixture comprising A) a polyol resin, B) at least one compound comprising at least one of a dibasic carboxylic acid or derivative thereof, an anhydride, a caprolactone, a C=O source, a polyhydric alcohol, or a combination thereof; and C) a catalyst.

In any aspect or embodiment described herein, the polyol resin comprises either (i) a rosin-based polyol, (ii) a bio-based polyol, or (iii) a combination of (i) and (ii).

In any aspect or embodiment described herein, (i) the rosin-based polyol resin is derived from a glycidyl ester of a rosin acid or a derivative thereof, a glycidyl ester of a fatty acid or a derivative thereof, or a combination thereof; and a hydroxyl-functionalized nucleophile comprising water, a hydroxyl-functionalized amine, a hydroxyl-functionalized thiol, a polyhydric alcohol, acrylic acid, methacrylic acid, or a combination thereof, and a catalyst.

In any aspect or embodiment described herein, (ii) the bio-based polyol resin is derived from a glycidyl ether component comprising an epoxy resin, a glycidyl ether compound comprising at least two glycidyl ether groups; or a combination thereof, and a bio-based component comprising rosin acid or a derivative thereof, a fatty acid or a derivative thereof, or a combination thereof; and a catalyst.

In any aspect or embodiment described herein, the hydroxyl-functionalized nucleophile comprises water, a hydroxyl-functionalized amine, a hydroxyl-functionalized thiol, a polyhydric alcohol, acrylic acid, methacrylic acid, or a combination thereof

In any aspect or embodiment described herein, the rosin acid or derivative thereof and the fatty acid or derivative thereof of the rosin-based polyol resin and the bio-based polyol resin are each independently derived from crude tall oil, tall oil fatty acid, distilled tall oil, tall oil rosin, gum tree rosin, wood rosin, softwood rosin, hardwood rosin, a natural oil, or a combination thereof.

In any aspect or embodiment described herein, the natural oil comprises vegetable oil, safflower oil, sesame oil, canola oil, olive oil, oil, coconut oil, or a combination thereof.

In any aspect or embodiment described herein, the epoxy resin comprises a bisphenol epoxy resin, a novolac epoxy resin, or a combination thereof.

In any aspect or embodiment described herein, the fatty acid derivatives of one or both of (i) and (ii) comprise dimer fatty acids, acrylic acid modified fatty acids, maleic anhydride modified fatty acids, or a combination thereof.

In any aspect or embodiment described herein, the rosin acid derivatives comprise hydrogenated rosins, disproportionated rosins, maleic anhydride modified rosins, fumaric acid modified rosins, or a combination thereof.

In any aspect or embodiment described herein, a molar ratio of the glycidyl ether component of the bio-based polyol resin to the rosin acid or a derivative thereof, the fatty acid or a derivative thereof, or the combination thereof is about 0.5:1 to about 1.5:1, or about 0.9:1 to about 1.1:1.

In any aspect or embodiment described herein, a molar ratio of the glycidyl ether component to the rosin acid or a derivative thereof, the fatty acid or a derivative thereof, or the combination thereof is about 1:2.

In any aspect or embodiment described herein, the glycidyl ether component comprises a diglycidyl ether of neopentyl glycol, a diglycidyl ether of 1,4-butanediol, diglycidyl ether of resorcinol; trimethylolpropane triglycidyl ether; pentaerythritol tetraglycidyl ether, or a combination thereof.

In any aspect or embodiment described herein, the polyhydric alcohol comprises ethylene glycol, 1,2-propylene glycol, 1,3-propane diol, butylene glycol, pentylene glycol, 3-methyl-1,5-pentanediol, 1,6-hexane diol, 2-ethyl-2-hexyl-l,3-propanediol, 1,7-heptane-diol, 1,8-octanediol , 1,9-nonanediol. 1,10-decanediol, 1,4-cyclohexane diol, diols derived from caprolactone, diols derived from lactide, or a combination thereof.

In any aspect or embodiment described herein, the dibasic acid or derivate thereof comprises adipic acid, fumaric acid, succinic acid, isophthalic acid, terephthalic acid, maleic acid, glutaric acid, diglycolic acid, itaconic acid, suberic acid, dodecanedioic acid, folic acid, azelaic acid, glutaconic acid, glutamic acid, aspartic acid, sebacic acid, pamoic acid, tartaric acid, tartronic acid, acetylenedicarboxylic acid, malonic acid, dodecylsuccinic acid, fatty diacid, fatty acid dimer, naphthalenedicarboxylic acid, esters thereof, or a combination thereof.

In any aspect or embodiment described herein, the anhydride comprises succinic anhydride, malic anhydride, dodecylsuccinic anhydride, phthalic anhydride, or a combination thereof.

In any aspect or embodiment described herein, the rosin-based polyol resin is derived from a glycidyl ester of a rosin acid or a disproportionated rosin acid.

In any aspect or embodiment described herein, the rosin-based polyol resin is derived from a glycidyl ester of a disproportionated rosin acid and water, a hydroxyl-functionalized amine, or a combination thereof.

In any aspect or embodiment described herein, the multifunctional polyol resin is a polyester polyol resin obtained from a reaction mixture comprising a polyol, a dibasic carboxylic acid or derivative thereof, an anhydride, or a combination thereof; and a polyhydric alcohol.

In any aspect or embodiment described herein, the multifunctional polyol resin is a polycaprolactone polyol resin obtained from a reaction mixture comprising a polyol and a caprolactone.

In any aspect or embodiment described herein, the multifunctional polyol resin is a polyether resin obtained from a reaction mixture comprising a polyol and a cyclic ether, a polyhydric alcohol, or a combination thereof.

In any aspect or embodiment described herein, the multifunctional polyol resin is a polycarbonate resin obtained from a reaction mixture comprising a polyol and a C=O source, preferably dimethyl carbonate.

In any aspect or embodiment described herein, the polyurethane is derived from a multifunctional polyol resin, a diisocyanate, and optionally, an auxiliary polyol resin in the presence of a catalyst.

In any aspect or embodiment described herein, the auxiliary polyol resin a polyester polyol, a polyether polyol, a polyacrylate polyol, or a combination thereof.

In any aspect or embodiment described herein, the polyurethane comprises repeating units derived from a monomeric, an oligomeric, or a polymeric diisocyanate.

In any aspect or embodiment described herein, the diisocyanate comprises monomeric or polymeric 2,2'-, 2,4'- and 4,4'-diphenylmethane diisocyanate; 3,3'-dimethyl-4,4'-biphenylene diisocyanate; a toluene diisocyanate; a modified liquid 4,4'-diphenylmethane diisocyanate; hexamethylene-diisocyanate; 4,4'dicyclohexylmethane diisocyanate; isophorone diisocyanate; para-phenylene diisocyanate; meta-phenylene diisocyanate; tetramethylene diisocyanate; dodecane diisocyanate; octamethylene diisocyanate; decamethylene diisocyanate; cyclobutane-1,3-diisocyanate; 1,2-, 1,3- and 1,4-cyclohexane diisocyanate; 2,4- and 2,6-methylcyclohexane diisocyanate; 4,4'- and 2,4'-dicyclohexyldiisocyanate; 1,3,5-cyclohexane triisocyanate; a isocyanate-methylcyclohexane isocyanate; a isocyanatoethylcyclohexane isocyanate; a bis(isocyanatomethyl)-cyclohexane diisocyanate; 4,4'- and 2,4'-bis(isocyanatomethyl) dicyclohexane; isophorone diisocyanate; 2,4- and 2,6-hexahydrotoluenediisocyanate; 1,2-, 1,3- and 1,4-phenylene diisocyanate; triphenyl methane-4,4',4"-triisocyanate; naphthylene-1,5-diisocyanate; 2,4'-, 4,4'- and 2,2-biphenyl diisocyanate; a polyphenyl polymethylene polyisocyanate; meta-tetramethylxylene diisocyanate; para-tetramethylxylene diisocyanate, or a combination thereof.

In any aspect or embodiment described herein, a melamine resin is derived from a multifunctional polyol resin of the present disclosure, a melamine, and optionally, an auxiliary polyol resin, in the presence of a catalyst.

In any aspect or embodiment described herein, a curable composition comprises a multi-part kit.

In any aspect or embodiment described herein, wherein the multi-part kit comprises Part A, Part B, and a catalyst.

In any aspect or embodiment described herein, Part A comprises a multifunctional polyol resin of the present disclosure and optionally, an auxiliary resin.

In any aspect or embodiment described herein, Part B comprises a diisocyanate or a melamine.

In any aspect or embodiment described herein, the catalyst is present in one or both of Parts A and B.

In any aspect or embodiment described herein, a cured composition comprises the polyurethane resin, the melamine resin, or the curable composition.

In any aspect or embodiment described herein, a method for the manufacture of a cured polyurethane resin comprises combining the multifunctional polyol resin, and optionally, an auxiliary polyol resin in the presence of a catalyst.

In any aspect or embodiment described herein, a method for the manufacture of a cured polyurethane resin comprises combining the multifunctional polyol resin, the isocyanate, and optionally, an auxiliary polyol resin in the presence of a catalyst.

In any aspect or embodiment described herein, a method for the manufacture of a cured melamine resin comprises combining the multifunctional polyol resin, the melamine, and optionally, an auxiliary polyol resin in the presence of a catalyst.

In any aspect or embodiment described herein, a method for the manufacture of a cured composition comprises combining Part A and Part B of the curable composition

In any aspect or embodiment described herein, an article comprises the cured composition.

In any aspect or embodiment described herein, the article comprises a coating, an encapsulant, or an adhesive.

While several embodiments of the invention of the present disclosure have been shown and described herein, it will be understood that such embodiments are provided by way of example only. Numerous variations, changes and substitutions will occur to those skilled in the art without departing from the spirit of the invention. Rather, the present disclosure is to cover all modifications, equivalents, and alternatives falling within the scope of the present disclosure as defined by the following appended claims and their legal equivalents. Accordingly, it is intended that the description and appended claims cover all such variations as fall within the spirit and scope of the invention.

The contents of all references, patents, pending patent applications and published patents, cited throughout this application are hereby expressly incorporated by reference.

Those skilled in the art will recognize, or be able to ascertain using no more than routine experimentation, many equivalents to the specific embodiments of the invention described herein. Such equivalents are intended to be encompassed by the following claims. It is understood that the detailed examples and embodiments described herein are given by way of example for illustrative purposes only, and are in no way considered to be limiting to the invention. Various modifications or changes in light thereof will be suggested to persons skilled in the art and are included within the spirit and purview of this application and are considered within the scope of the appended claims. For example, the relative quantities of the ingredients can be varied to optimize the desired effects, additional ingredients can be added, and/or similar ingredients can be substituted for one or more of the ingredients described. Additional advantageous features and functionalities associated with the systems, methods, and processes of the present invention will be apparent from the appended claims. Moreover, those skilled in the art will recognize, or be able to ascertain using no more than routine experimentation, many equivalents to the specific embodiments of the invention described herein. Such equivalents are intended to be encompassed by the following claims.

## Claims

1. A multifunctional polyol resin obtained from a reaction mixture comprising
A) a polyol resin comprising
i) rosin-based polyol resin derived from at least one of:
a glycidyl ester of a rosin acid or a derivative thereof, a glycidyl ester of a fatty acid or a derivative thereof, or a combination thereof; and
a hydroxyl-functionalized nucleophile comprising at least one of water, a hydroxyl-functionalized amine, a hydroxyl-functionalized thiol, a polyhydric alcohol, acrylic acid, methacrylic acid, or a combination thereof, and
a catalyst; or
ii) a bio-based polyol resin derived from at least one of:
a glycidyl ether component comprising an epoxy resin, a glycidyl ether compound comprising at least two glycidyl ether groups; or a combination thereof, and
at least one of a bio-based component comprising rosin acid or a derivative thereof, a fatty acid or a derivative thereof, or a combination thereof, and
a catalyst; or
iii) a combination thereof; and
B) at least one compound comprising at least one of a dibasic carboxylic acid or derivative thereof, an anhydride, a caprolactone, a C=O source, a polyhydric alcohol, or a combination thereof; and
C) a catalyst.

2. The multifunctional polyol resin according to claim 1, wherein
the hydroxyl-functionalized nucleophile comprises at least one of water, a hydroxyl-functionalized amine, a hydroxyl-functionalized thiol, a polyhydric alcohol, acrylic acid, methacrylic acid, or a combination thereof;
the rosin acid or derivative thereof and the fatty acid or derivative thereof of the rosin-based polyol resin and the bio-based polyol resin are each independently derived from crude tall oil, tall oil fatty acid, distilled tall oil, tall oil rosin, gum tree rosin, wood rosin, softwood rosin, hardwood rosin, a natural oil, or a combination thereof;
the epoxy resin comprises at least one of a bisphenol epoxy resin, a novolac epoxy resin, or a combination thereof; or
a combination thereof.

3. The multifunctional polyol resin according to claim 2, wherein the natural oil comprises at least one of vegetable oil, safflower oil, sesame oil, canola oil, olive oil, oil, coconut oil, or a combination thereof.

4. The multifunctional polyol resin according to any one of the preceding claims, wherein
the fatty acid derivatives comprise at least one of dimer fatty acids, acrylic acid modified fatty acids, maleic anhydride modified fatty acids, or a combination thereof;
the rosin acid derivatives comprise at least one of hydrogenated rosins, disproportionated rosins, maleic anhydride modified rosins, fumaric acid modified rosins, or a combination thereof; or
a combination thereof.

5. The multifunctional polyol resin according to any one of the preceding claims, wherein
the bio-based polyol resin and the rosin-based polyol resin are each derived from a mixture of about 1 to about 99 wt% of a fatty acid or a derivative thereof, and about 1 to about 99 wt% of a rosin acid or a derivative thereof;
a molar ratio of the glycidyl ether component of the bio-based polyol resin to the rosin acid or a derivative thereof, the fatty acid or a derivative thereof, or the combination thereof is about 0.5:1 to about 1.5:1, or about 0.9:1 to about 1.1:1;
a molar ratio of the glycidyl ether component to the rosin acid or a derivative thereof, the fatty acid or a derivative thereof, or the combination thereof is about 1:2; or
a combination thereof.

6. The multifunctional polyol resin according to any one of the preceding claims, wherein
the glycidyl ether component comprises at least one of a diglycidyl ether of neopentyl glycol, a diglycidyl ether of 1,4-butanediol, diglycidyl ether of resorcinol, trimethylolpropane triglycidyl ether, pentaerythritol tetraglycidyl ether, or a combination thereof;
the polyhydric alcohol comprises at least one of ethylene glycol, 1,2-propylene glycol, 1,3-propane diol, butylene glycol, pentylene glycol, 3-methyl-1,5-pentanediol, 1,6-hexane diol, 2-ethyl-2-hexyl-1,3-propanediol, 1,7-heptane-diol, 1,8-octanediol , 1,9-nonanediol. 1,10-decanediol, 1,4-cyclohexane diol, diols derived from caprolactone, diols derived from lactide, or a combination thereof;
the dibasic acid or derivate thereof comprises at least one of adipic acid, fumaric acid, succinic acid, isophthalic acid, terephthalic acid, maleic acid, glutaric acid, diglycolic acid, itaconic acid, suberic acid, dodecanedioic acid, folic acid, azelaic acid, glutaconic acid, glutamic acid, aspartic acid, sebacic acid, pamoic acid, tartaric acid, tartronic acid, acetylenedicarboxylic acid, malonic acid, dodecylsuccinic acid, fatty diacid, fatty acid dimer, naphthalenedicarboxylic acid, esters thereof, or a combination thereof;
the anhydride comprises at least one of succinic anhydride, malic anhydride, dodecylsuccinic anhydride, phthalic anhydride, or a combination thereof; or
a combination thereof.

7. The multifunctional polyol resin according to any one of the preceding claims, wherein
the rosin-based polyol resin is derived from a glycidyl ester of a rosin acid or a disproportionated rosin acid;
the rosin-based polyol resin is derived from at least one of a glycidyl ester of a disproportionated rosin acid and water, a hydroxyl-functionalized amine, or a combination thereof; or
a combination thereof.

8. The multifunctional polyol resin according to any one of the preceding claims, wherein
the glycidyl ether component of the bio-based resin is bisphenol A epoxy resin, and the bio-based component is a distilled tall oil comprising up to about 50 wt% rosin acids, based on the total weight of the distilled tall oil;
the glycidyl ether component of the bio-based resin is a bisphenol A epoxy resin and a novolac epoxy resin, and the bio-based component is a distilled tall oil comprising up to about 50 wt% rosin acids, based on the total weight of the distilled tall oil; or
the glycidyl ether component of the bio-based resin is triglycidyl ether and novolac epoxy resin, and the bio-based component is a distilled tall oil comprising up to about 50 wt% rosin acids, based on the total weight of distilled tall oil;
the glycidyl ether component of the bio-based resin is trimethylolpropane triglycidyl ether, and bio-based component is a distilled tall oil comprising from about 50 wt% to about 70 wt% rosin acid, based on the total weight of the bio-based component; or
a combination thereof.

9. The multifunctional polyol resin according to any one of the preceding claims, wherein
the multifunctional polyol resin is a polyester polyol resin obtained from a reaction mixture comprising atleast one of a polyol, a dibasic carboxylic acid or derivative thereof, an anhydride, or a combination thereof; and a polyhydric alcohol;
the multifunctional polyol resin is a polycaprolactone polyol resin obtained from a reaction mixture comprising a polyol and a caprolactone;
the multifunctional polyol resin is a polyether resin obtained from a reaction mixture comprising a polyol and a cyclic ether, a polyhydric alcohol, or a combination thereof;
the multifunctional polyol resin is a polycarbonate resin obtained from a reaction mixture comprising a polyol and a C=O source (preferably dimethyl carbonate)or
a combination thereof.

10. A resin, comprising:
a polyurethane resin derived from a multifunctional polyol resin according to any one of the preceding claims, and optionally, an auxiliary polyol resin in the presence of a catalyst; or
a melamine-based resin derived from a multifunctional polyol resin according to any one of the preceding claims, a melamine, and optionally, an auxiliary polyol resin, in the presence of a catalyst.

11. The polyurethane resin according to claim 10, wherein:
the auxiliary polyol resin comprises a polyester polyol, a polyether polyol, a polyacrylate polyol, or a combination thereof;
a ratio of multifunctional polyol resin to auxiliary epoxy resin is about 10:90 to about 90:10, about 25:75 to about 75:25, or about 50:50; or
a combination thereof; and/or,
the polyurethane resin comprising repeating units derived from a monomeric, an oligomeric, or a polymeric diisocyanate, preferably the diisocyanate comprises at least one of monomeric or polymeric 2,2'-, 2,4'- and 4,4'-diphenylmethane diisocyanate; 3,3'-dimethyl-4,4'-biphenylene diisocyanate; a toluene diisocyanate; a modified liquid 4,4'-diphenylmethane diisocyanate; hexamethylene-diisocyanate; 4,4'dicyclohexylmethane diisocyanate; isophorone diisocyanate; para-phenylene diisocyanate; meta-phenylene diisocyanate; tetramethylene diisocyanate; dodecane diisocyanate; octamethylene diisocyanate; decamethylene diisocyanate; cyclobutane-1,3-diisocyanate; 1,2-, 1,3- and 1,4-cyclohexane diisocyanate; 2,4- and 2,6-methylcyclohexane diisocyanate; 4,4'- and 2,4'-dicyclohexyldiisocyanate; 1,3,5-cyclohexane triisocyanate; a isocyanate-methylcyclohexane isocyanate; a isocyanatoethylcyclohexane isocyanate; a bis(isocyanatomethyl)-cyclohexane diisocyanate; 4,4'- and 2,4'-bis(isocyanatomethyl) dicyclohexane; isophorone diisocyanate; 2,4- and 2,6-hexahydrotoluenediisocyanate; 1,2-, 1,3- and 1,4-phenylene diisocyanate; triphenyl methane-4,4',4"-triisocyanate; naphthylene-1,5-diisocyanate; 2,4'-, 4,4'- and 2,2-biphenyl diisocyanate; a polyphenyl polymethylene polyisocyanate; meta-tetramethylxylene diisocyanate; para-tetramethylxylene diisocyanate, or a combination thereof.

12. A curable composition comprising Part A and Part B, wherein
Part A comprises a multifunctional polyol resin according to any one of claims 1-9 and optionally, an auxiliary resin;
Part B comprises a diisocyanate or a melamine,
wherein a catalyst is present in Part A, Part B, or a combination thereof.

13. A cured composition comprising the product obtained by curing the polyurethane resin of claims 10 or 11, the melamine-based resin of claim 10, or the curable composition of claim 12.

14. A method for the manufacture of a cured composition, the method comprising combining Part A and Part B of the curable composition of claim 12.

15. An article comprising the cured composition of claim 13 or 14, preferably the article is a coating, an encapsulant, or an adhesive.
